(19) **Europäisches Patentamt**
**European Patent Office**
**Office européen des brevets**

(11) **EP 3 749 044 A1**

(12) **EUROPEAN PATENT APPLICATION**
published in accordance with Art. 153(4) EPC

(43) Date of publication:
**09.12.2020 Bulletin 2020/50**

(21) Application number: **18905966.0**

(22) Date of filing: **13.02.2018**

(51) Int Cl.:
**H04W 74/04** (2009.01)

(86) International application number:
**PCT/CN2018/076643**

(87) International publication number:
**WO 2019/157628 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Huawei Technologies Co., Ltd.**
**Longgang District**
**Shenzhen, Guangdong 518129 (CN)**

(72) Inventors:
• **SU, Liyan**
**Shenzhen, Guangdong 518129 (CN)**
• **LI, Chaojun**
**Shenzhen, Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **INFORMATION TRANSMISSION METHOD, COMMUNICATION DEVICE, AND STORAGE MEDIUM**

(57) Embodiments of this application provide an information transmission method, a communications apparatus, and a storage medium. A network device configures, for a terminal device by using higher layer signaling, a frequency domain resource size set that includes some frequency domain resource sizes supported by system bandwidth, so that the network device may allocate, to the terminal device, a frequency domain resource corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the terminal device (to be specific, when the quantity of bits occupied by the RIV increases or decreases, a quantity of schemes for a frequency domain resource that can be allocated by the network device to to-be-transmitted data also increases or decreases accordingly). Therefore, the quantity of schemes for the frequency domain resource that can be allocated by the network device to the terminal device is reduced, so that a quantity of bits occupied by resource allocation information in control information can be further reduced, to further improve reliability of the control information.

```
┌─────────────────┐                    ┌─────────────────┐
│ Network device  │                    │ Terminal device │
└─────────────────┘                    └─────────────────┘
        │                                       │
┌───────────────────────┐                       │
│ S101: Generate a first RIV │                  │
└───────────────────────┘                       │
        │   S102: Send the first RIV to the terminal device   │
        │ ────────────────────────────────────────────────► │
        │                          ┌──────────────────────────────┐
        │                          │ S103: Determine a first frequency domain │
        │                          │ resource based on the first RIV and a    │
        │                          │ frequency domain resource size set       │
        │                          └──────────────────────────────┘
        │                                       │
```

FIG. 3

**Description**

**TECHNICAL FIELD**

Embodiments of this application relate to communications technologies, and in particular, to an information transmission method, a communications apparatus, and a storage medium.

**BACKGROUND**

In a long term evolution (long term evolution, LTE) communications system, data transmitted between a network device and a terminal device is divided, at a physical layer, into data packets in a form of transport blocks (transport block, TB). The TB is transmitted based on scheduling performed by the network device. To be specific, the network device sends control information to the terminal device through a downlink control channel, to indicate scheduling information of a scheduled TB by using the control information. The scheduling information includes resource allocation information (to be specific, a time domain resource and a frequency domain resource that are used), a modulation and coding scheme (modulation and coding scheme, MCS) index, and the like of the scheduled TB.

In an existing LTE communications system, a network device may allocate, in an allocation manner of a downlink resource allocation type 0 or a downlink resource allocation type 2, a frequency domain resource used to transmit a downlink TB, and allocate, in an allocation manner of an uplink resource allocation type 0, a frequency domain resource used to transmit an uplink TB. When the network device allocates the frequency domain resource in the allocation manner of the downlink resource allocation type 0, the network device may use resource allocation information to carry a bitmap (bitmap), to indicate a resource block group (resource block group, RBG) allocated to a scheduled TB. When the network device allocates the frequency domain resource in the allocation manner of the downlink resource allocation type 2 or the uplink resource allocation type 0, the network device may use resource allocation information to carry a resource indicator value (resource indicator value, RIV), to indicate a segment of contiguous resource blocks (resource block, RB) allocated to a scheduled TB.

An ultra-reliable low-latency communication (ultra-reliable and low latency communications, URLLC) service is an important service in a fifth generation (fifth generation, 5G) communications system, and requires very high reliability and a very low latency during transmission. To ensure that reliability of control information meets a reliability requirement of the URLLC service, resource allocation information in the control information needs to be compressed in the 5G communications system. However, in an existing resource allocation information compression manner, although a quantity of bits occupied by the resource allocation information in the control information can be reduced to some extent, the resource allocation information still occupies a relatively large quantity of bits, resulting in relatively low reliability of the control information.

**SUMMARY**

Embodiments of this application provide an information transmission method, a communications apparatus, and a storage medium, to resolve a technical problem that resource allocation information occupies a relatively large quantity of bits, resulting in relatively low reliability of control information.

According to a first aspect, an embodiment of this application provides an information transmission method, including: A first communications apparatus in the method may be a terminal device, or may be a chip in the terminal device. A second communications apparatus in the method in this embodiment of this application may be a network device, or may be a chip in the network device. The following describes the method by using an example in which the first communications apparatus is a terminal device and the second communications apparatus is a network device. The method includes:

receiving, by the terminal device, a first resource indicator value RIV, where the first RIV is used to indicate a first frequency domain resource used when the network device performs data transmission with the terminal device, a quantity of frequency domain resource units of the first frequency domain resource is a first frequency domain resource size, the frequency domain resource unit is a scheduling unit of a frequency domain resource used when the network device performs data transmission with the terminal device, the first frequency domain resource size belongs to a frequency domain resource size set, and the frequency domain resource size set is configured by using higher layer signaling; and

determining, by the terminal device, the first frequency domain resource based on the first RIV and the frequency domain resource size set.

According to the information transmission method provided in the first aspect, the network device may configure, for the terminal device by using higher layer signaling, a frequency domain resource size set that includes some frequency domain resource sizes supported by system bandwidth, so that the network device may allocate, to to-be-transmitted data, a frequency domain resource corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

In a possible design, a second RIV is used to indicate a second frequency domain resource, a quantity of frequency domain resource units of the second frequency domain resource is a second frequency domain resource size, and the second frequency domain resource size belongs to the frequency domain resource size set; and

when the second RIV is less than the first RIV, the second frequency domain resource size is less than or equal to the first frequency domain resource size.

According to the information transmission method provided in this possible design, the network device conveniently calculates an RIV used to indicate a frequency domain resource, to improve efficiency of generating control information by the network device. Correspondingly, the terminal device conveniently and quickly determines the first frequency domain resource indicated by the first RIV, to reduce a time for processing control information by the terminal device, and further reduce a data transmission latency.

In a possible design, when the second frequency domain resource size is equal to the first frequency domain resource size, a number of the first frequency domain resource unit of the second frequency domain resource is greater than a number of the first frequency domain resource unit of the first frequency domain resource; or

numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

According to the information transmission method provided in the possible design, the network device conveniently calculates an RIV used to indicate a frequency domain resource, to improve efficiency of generating control information by the network device. Correspondingly, the terminal device conveniently and quickly determines the first frequency domain resource indicated by the first RIV, to reduce a time for processing control information by the terminal device, and further reduce a data transmission latency.

According to a second aspect, an embodiment of this application provides an information transmission method. A first communications apparatus in the method may be a terminal device, or may be a chip in the terminal device. A second communications apparatus in the method in this embodiment of this application may be a network device, or may be a chip in the network device. The following describes the method by using an example in which the first communications apparatus is a terminal device and the second communications apparatus is a network device. The method includes:

receiving, by the terminal device, a first resource indicator value RIV, where the first RIV is used to indicate a first frequency domain resource used when the network device performs data transmission with the terminal device, a quantity of frequency domain resource units of the first frequency domain resource is a first frequency domain resource size, the frequency domain resource unit is a scheduling unit of a frequency domain resource used when the network device performs data transmission with the terminal device, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth; and

determining, by the terminal device, the first frequency domain resource based on the first RIV and the frequency domain resource size set.

According to the information transmission method provided in the second aspect, the network device may configure, for the terminal device by using higher layer signaling, a frequency domain resource size set that includes some frequency domain resource sizes supported by the system bandwidth, and each frequency domain resource size may correspond to all frequency domain resource patterns or some frequency domain resource patterns, so that the network device may allocate, to to-be-transmitted data, one of some frequency domain resource patterns corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

In a possible design, when the first frequency domain resource size is greater than or equal to the predefined size, for each frequency domain resource pattern included in the proper subset, frequency domain resource units in the system bandwidth that do not belong to the frequency domain resource pattern are discontiguous; and/or when the first frequency domain resource size is less than the predefined size, frequency domain resource units in each frequency domain resource pattern included in the proper subset are discontiguous.

According to the information transmission method provided in this possible design, transmission performance existing when a plurality of best RBGs in the system bandwidth are selected (which may also be referred to as frequency selection) and transmission performance existing when RBGs in the system bandwidth are evenly selected (which may also be referred to as frequency diversity) have a relatively small difference. In other words, transmission performance is not significantly reduced when data is transmitted in a frequency diversity manner. Therefore, a proper subset corresponding to each frequency domain resource size in the frequency domain resource size set is configured in the foregoing manner, so that even if the network device cannot learn of quality of a channel between the network device and the terminal device, the network device may still allocate, to the terminal device, a frequency domain resource that can ensure transmission performance, to ensure data transmission performance.

In a possible design, the predefined size is equal to a half of a quantity of frequency domain resource units included in the system bandwidth.

According to the information transmission method provided in this possible design, a larger frequency domain resource size causes a smaller difference between transmission performance existing when data is transmitted in a frequency diversity manner and transmission performance existing when data is transmitted by using a best RBG. Therefore, a frequency domain resource size that is in the frequency domain resource size set and that is greater than or equal to a half of the quantity of frequency domain resource units included in the system bandwidth corresponds to a proper subset, so that even if the network device cannot learn of quality of a channel between the network device and the terminal device, the network device can allocate, to the terminal device, a frequency domain resource that can ensure transmission performance. This ensures data transmission performance.

In a possible design, when the first frequency domain resource size is greater than the predefined size, the proper subset includes only one frequency domain resource pattern.

According to the information transmission method provided in the possible design, a quantity of schemes for a frequency domain resource that can be allocated by the network device to to-be-transmitted data can be further reduced. A quantity of bits occupied by the RIV is positively correlated with the quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

According to a third aspect, an embodiment of this application provides an information transmission method. A first communications apparatus in the method may be a terminal device, or may be a chip in the terminal device. A second communications apparatus in the method in this embodiment of this application may be a network device, or may be a chip in the network device. The following describes the method by using an example in which the first communications apparatus is a terminal device and the second communications apparatus is a network device. The method includes:

generating, by the network device, a first resource indicator value RIV, where the first RIV is used to indicate a first frequency domain resource used when the network device performs data transmission with the terminal device, a quantity of frequency domain resource units of the first frequency domain resource is a first frequency domain resource size, the frequency domain resource unit is a scheduling unit of a frequency domain resource used when the network device performs data transmission with the terminal device, the first frequency domain resource size belongs to a frequency domain resource size set, and the frequency domain resource size set is configured by using higher layer signaling; and

sending, by the network device, a first resource indicator value RIV to the terminal device.

In a possible design, a second RIV is used to indicate a second frequency domain resource, a quantity of frequency domain resource units of the second frequency domain resource is a second frequency domain resource size, and the second frequency domain resource size belongs to the frequency domain resource size set; and

when the second RIV is less than the first RIV, the second frequency domain resource size is less than or equal to the first frequency domain resource size.

In a possible design, when the second frequency domain resource size is equal to the first frequency domain resource size, a number of the first frequency domain resource unit of the second frequency domain resource is greater than a number of the first frequency domain resource unit of the first frequency domain resource; or

numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

For beneficial effects of the information transmission method provided in the third aspect and the possible designs of the third aspect, refer to the beneficial effects brought by the first aspect and the possible designs of the first aspect. Details are not described herein again.

According to a fourth aspect, an embodiment of this application provides an information transmission method. A first communications apparatus in the method may be a terminal device, or may be a chip in the terminal device. A second communications apparatus in the method in this embodiment of this application may be a network device, or may be a chip in the network device. The following describes the method by using an example in which the first communications apparatus is a terminal device and the second communications apparatus is a network device. The method includes:

generating, by the network device, a first resource indicator value RIV, where the first RIV is used to indicate a first frequency domain resource used when the network device performs data transmission with the terminal device, a quantity of frequency domain resource units of the first frequency domain resource is a first frequency domain resource size, the frequency domain resource unit is a scheduling unit of a frequency domain resource used when the network device performs data transmission with the terminal device, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth; and

sending, by the network device, a first resource indicator value RIV to the terminal device.

In a possible design, when the first frequency domain resource size is greater than or equal to the predefined size, for each frequency domain resource pattern included in the proper subset, frequency domain resource units in the system bandwidth that do not belong to the frequency domain resource pattern are discontiguous; and/or

when the first frequency domain resource size is less than the predefined size, frequency domain resource units in each frequency domain resource pattern included in the proper subset are discontiguous.

In a possible design, the predefined size is equal to a half of a quantity of frequency domain resource units included in the system bandwidth.

In a possible design, when the first frequency domain resource size is greater than the predefined size, the proper subset includes only one frequency domain resource pattern.

For beneficial effects of the information transmission method provided in the fourth aspect and the possible designs of the fourth aspect, refer to the beneficial effects brought by the second aspect and the possible designs of the second aspect. Details are not described herein again.

According to a fifth aspect, an embodiment of this application provides a communications apparatus. The communications apparatus may be a terminal device, or may be a chip applied to the terminal device. The communications apparatus includes:

a receiving module, configured to receive a first resource indicator value RIV, where the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling; and

a processing module, configured to determine the first frequency domain resource based on the first RIV and the frequency domain resource size set.

In a possible design, a second RIV is used to indicate a second frequency domain resource, a quantity of frequency domain resource units of the second frequency domain resource is a second frequency domain resource size, and the second frequency domain resource size belongs to the frequency domain resource size set; and

when the second RIV is less than the first RIV, the second frequency domain resource size is less than or equal to the first frequency domain resource size.

In a possible design, when the second frequency domain resource size is equal to the first frequency domain resource size, a number of the first frequency domain resource unit of the second frequency domain resource is greater than a number of the first frequency domain resource unit of the first frequency domain resource; or

numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

For beneficial effects of the communications apparatus provided in the fifth aspect and the possible designs of the fifth aspect, refer to the beneficial effects brought by the first aspect and the possible designs of the first aspect. Details are not described herein again.

According to a sixth aspect, an embodiment of this application provides a communications apparatus. The communications apparatus may be a terminal device, or may be a chip applied to the terminal device. The communications apparatus includes:

a receiving module, configured to receive a first resource indicator value RIV, where the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth; and

a processing module, configured to determine the first frequency domain resource based on the first RIV and the frequency domain resource size set.

In a possible design, when the first frequency domain resource size is greater than or equal to the predefined size, for each frequency domain resource pattern included in the proper subset, frequency domain resource units in the system bandwidth that do not belong to the frequency domain resource pattern are discontiguous; and/or

when the first frequency domain resource size is less than the predefined size, frequency domain resource units in each frequency domain resource pattern included in the proper subset are discontiguous.

In a possible design, the predefined size is equal to a half of a quantity of frequency domain resource units included in the system bandwidth.

In a possible design, when the first frequency domain resource size is greater than the predefined size, the proper subset includes only one frequency domain resource pattern.

For beneficial effects of the communications apparatus provided in the sixth aspect and the possible designs of the sixth aspect, refer to the beneficial effects brought by the second aspect and the possible designs of the second aspect. Details are not described herein again.

According to a seventh aspect, an embodiment of this application provides a communications apparatus. The communications apparatus may be a network device, or may be a chip applied to the network device. The communications apparatus includes:

a processing module, configured to generate a first resource indicator value RIV, where the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling; and
a sending module, configured to send the first resource indicator value RIV.

In a possible design, a second RIV is used to indicate a second frequency domain resource, a quantity of frequency domain resource units of the second frequency domain resource is a second frequency domain resource size, and the second frequency domain resource size belongs to the frequency domain resource size set; and when the second RIV is less than the first RIV, the second frequency domain resource size is less than or equal to the first frequency domain resource size.

In a possible design, when the second frequency domain resource size is equal to the first frequency domain resource size, a number of the first frequency domain resource unit of the second frequency domain resource is greater than a number of the first frequency domain resource unit of the first frequency domain resource; or numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

For beneficial effects of the communications apparatus provided in the seventh aspect and the possible designs of the seventh aspect, refer to the beneficial effects brought by the first aspect and the possible designs of the first aspect. Details are not described herein again.

According to an eighth aspect, an embodiment of this application provides a communications apparatus. The communications apparatus may be a network device, or may be a chip applied to the network device. The communications apparatus includes:

a processing module, configured to generate a first resource indicator value RIV, where the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth; and a sending module, configured to send the first resource indicator value RIV.

In a possible design, when the first frequency domain resource size is greater than or equal to the predefined size, for each frequency domain resource pattern included in the proper subset, frequency domain resource units in the system bandwidth that do not belong to the frequency domain resource pattern are discontiguous; and/or when the first frequency domain resource size is less than the predefined size, frequency domain resource units in each frequency domain resource pattern included in the proper subset are discontiguous.

In a possible design, the predefined size is equal to a half of a quantity of frequency domain resource units included in the system bandwidth.

In a possible design, when the first frequency domain resource size is greater than the predefined size, the proper subset includes only one frequency domain resource pattern.

For beneficial effects of the communications apparatus provided in the eighth aspect and the possible designs of the eighth aspect, refer to the beneficial effects brought by the second aspect and the possible designs of the second aspect. Details are not described herein again.

According to a ninth aspect, an embodiment of this application provides a communications apparatus. The communications apparatus includes a processor, a memory, and a receiver. The receiver is coupled to the processor, and the processor controls a receiving action of the receiver.

The memory is configured to store computer executable program code, and the program code includes an instruction. When the processor executes the instruction, the instruction enables the communications apparatus to perform the information transmission method according to the first aspect or the possible designs of the first aspect.

According to a tenth aspect, an embodiment of this application provides a communications apparatus. The communications apparatus includes a processor, a memory, and a receiver. The receiver is coupled to the processor, and the processor controls a receiving action of the receiver.

The memory is configured to store computer executable program code, and the program code includes an instruction. When the processor executes the instruction, the instruction enables the communications apparatus to perform the information transmission method according to the second aspect or the possible designs of the second aspect.

According to an eleventh aspect, an embodiment of this application provides a communications apparatus. The communications apparatus includes a processor, a memory, and a transmitter. The transmitter is coupled to the processor, and the processor controls a sending action of the transmitter.

The memory is configured to store computer executable program code, and the program code includes an instruction. When the processor executes the instruction, the instruction enables the communications apparatus to perform the information transmission method according to the third aspect or the possible designs of the third aspect.

According to a twelfth aspect, an embodiment of this application provides a communications apparatus. The communications apparatus includes a processor, a memory, and a transmitter. The transmitter is coupled to the processor, and the processor controls a sending action of the transmitter.

The memory is configured to store computer executable program code, and the program code includes an instruction. When the processor executes the instruction, the instruction enables the communications apparatus to perform the information transmission method according to the fourth aspect or the possible designs of the fourth aspect.

According to a thirteenth aspect, an embodiment of this application provides a communications apparatus, including units, modules, or circuits configured to perform the method according to the first aspect or the possible designs of the first aspect. The communications apparatus may be a terminal device, or may be a module applied to the terminal device, for example, may be a chip applied to the terminal device.

According to a fourteenth aspect, an embodiment of this application provides a communications apparatus, including units, modules, or circuits configured to perform the method according to the second aspect or the possible designs of the second aspect. The communications apparatus may be a terminal device, or may be a module applied to the terminal device, for example, may be a chip applied to the terminal device.

According to a fifteenth aspect, an embodiment of this application provides a communications apparatus, including units, modules, or circuits configured to perform the method according to the third aspect or the possible designs of the third aspect. The communications apparatus may be a network device, or may be a module applied to the network device, for example, may be a chip applied to the network device.

According to a sixteenth aspect, an embodiment of this application provides a communications apparatus, including units, modules, or circuits configured to perform the method according to the fourth aspect or the possible designs of the fourth aspect. The communications apparatus may be a network device, or may be a module applied to the network device, for example, may be a chip applied to the network device.

According to a seventeenth aspect, an embodiment of this application provides a computer program product including an instruction. When the instruction is run on a computer, the computer is enabled to perform the method according to the first aspect or the possible designs of the first aspect.

According to an eighteenth aspect, an embodiment of this application provides a computer program product including an instruction. When the instruction is run on a computer, the computer is enabled to perform the method according to the second aspect or the possible designs of the second aspect.

According to a nineteenth aspect, an embodiment of this application provides a computer program product including an instruction. When the instruction is run on a computer, the computer is enabled to perform the method according to the third aspect or the possible designs of the third aspect.

According to a twelfth aspect, an embodiment of this application provides a computer program product including an instruction. When the instruction is run on a computer, the computer is enabled to perform the method according to the fourth aspect or the possible designs of the fourth aspect.

According to a twenty-first aspect, this application provides a computer readable storage medium. The computer readable storage medium stores an instruction, and when the instruction is run on a computer, the computer is enabled to perform the method according to the first aspect or the possible designs of the first aspect.

According to a twenty-second aspect, this application provides a computer readable storage medium. The computer readable storage medium stores an instruction, and when the instruction is run on a computer, the computer is enabled to perform the method according to the second aspect or the possible designs of the second aspect.

According to a twenty-third aspect, this application provides a computer readable storage medium. The computer readable storage medium stores an instruction, and when the instruction is run on a computer, the computer is enabled to perform the method according to the third aspect or the possible designs of the third aspect.

According to a twenty-fourth aspect, this application provides a computer readable storage medium. The computer readable storage medium stores an instruction, and when the instruction is run on a computer, the computer is enabled to perform the method according to the fourth aspect or the possible designs of the fourth aspect.

According to the information transmission method, the communications apparatus, and the storage medium provided in the embodiments of this application, the network device may configure, for the terminal device by using higher layer signaling, a frequency domain resource size set that includes some frequency domain resource sizes supported by system bandwidth, so that the network device may allocate, to to-be-transmitted data, a frequency domain resource corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

**BRIEF DESCRIPTION OF DRAWINGS**

FIG. 1 is a schematic architectural diagram of a mobile communications system to which an embodiment of this application is applied;
FIG. 2A is a schematic diagram of an existing sTTI;
FIG. 2B is a schematic diagram 1 of existing frequency domain resource allocation;
FIG. 2C is a schematic diagram 2 of existing frequency domain resource allocation;
FIG. 2D is a schematic diagram 3 of existing frequency domain resource allocation;
FIG. 2E is a schematic diagram 4 of existing frequency domain resource allocation;
FIG. 3 is a signaling flowchart of an information transmission method according to an embodiment of this application;
FIG. 4A is a schematic diagram 1 of a frequency domain resource distribution according to an embodiment of this application;
FIG. 4B is a schematic diagram 2 of a frequency domain resource distribution according to an embodiment of this application;
FIG. 5 is a schematic diagram 3 of a frequency domain resource distribution according to an embodiment of this application;
FIG. 6 is a schematic structural diagram of a communications apparatus according to an embodiment of this application;
FIG. 7 is a schematic structural diagram of another communications apparatus according to an embodiment of this application;
FIG. 8 is a schematic structural diagram of still another communications apparatus according to an embodiment of this application;
FIG. 9 is a schematic structural diagram of yet another communications apparatus according to an embodiment of this application;
FIG. 10 is a schematic structural diagram of still yet another communications apparatus according to an embodiment of this application; and
FIG. 11 is a schematic structural diagram of a further communications apparatus according to an embodiment of this application.

**DESCRIPTION OF EMBODIMENTS**

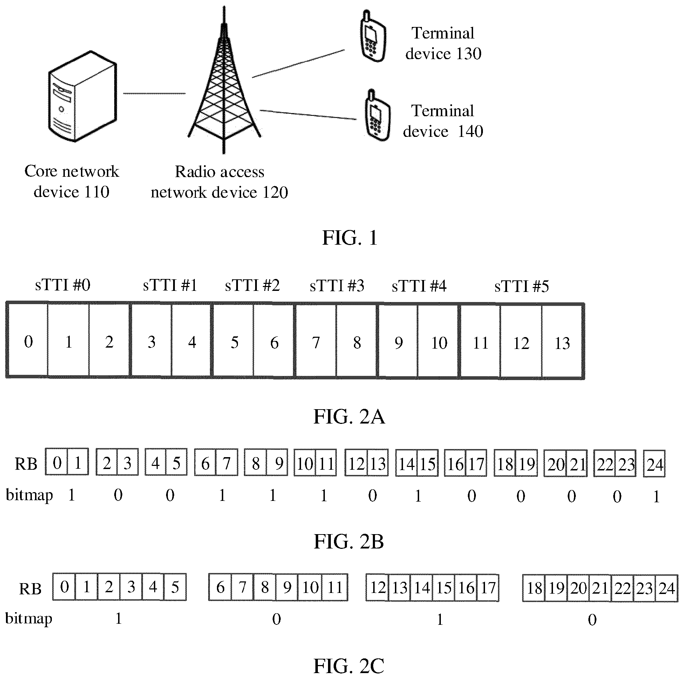

FIG. 1 is a schematic architectural diagram of a mobile communications system to which an embodiment of this application is applied. As shown in FIG. 1, the mobile communications system may include a core network device 110, a radio access network device 120, and at least one terminal device (for example, a terminal device 130 and a terminal device 140 in FIG. 1). The terminal device is connected to the radio access network device 120 in a wireless manner, and the radio access network device 120 is connected to the core network device 110 in a wireless or wired manner. The core network device 110 and the radio access network device 120 may be different independent physical devices, or a function of the core network device 110 and a logical function of the radio access network device 120 may be integrated into one physical device, or some functions of the core network device 110 and some functions of the radio access network device 120 may be integrated into one physical device. The terminal device may be located at a fixed location, or may be removable. FIG. 1 is only a schematic diagram. The mobile communications system may further include another network device, for example, may further include a wireless relay device and a wireless backhaul device, which are not shown in FIG. 1. A quantity of core network devices 110, a quantity of radio access network devices 120, and a quantity of terminal devices included in the mobile communications system are not limited in this embodiment of this application.

The radio access network device 120 is an access device through which the terminal device accesses the mobile communications system in a wireless manner, and may be a NodeB NodeB, an evolved NodeB eNodeB, a 5G mobile communications system, a base station in a new radio (new radio, NR) communications system, a base station in a future mobile communications system, an access node in a Wi-Fi system, or the like. A specific technology and a specific device form that are used by the radio access network device 120 are not limited in this embodiment of this application. In this embodiment of this application, the radio access network device 120 is referred to as a network device for short. Unless otherwise specified, in the embodiments of this application, the network device is the radio access network device 120. In addition, in this embodiment of this application, the terms 5G and NR may be equivalent.

The terminal device may also be referred to as a terminal terminal, user equipment (user equipment, UE), a mobile station (mobile station, MS), a mobile terminal (mobile terminal, MT), or the like. The terminal device may be a mobile phone (mobile phone), a tablet (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device 120 and the terminal device may be deployed on land, including an indoor or outdoor device, a handheld device, or a vehicle-mounted device. The radio access network device 120 and the terminal device may alternatively be deployed on water, or be deployed on an aircraft, a balloon, or a satellite in the air. An application scenario of the radio access network device 120 and the terminal device is not limited in this embodiment of this application.

Communication between the radio access network device 120 and the terminal device may be performed by using a licensed spectrum (licensed spectrum), or an unlicensed spectrum (unlicensed spectrum), or both a licensed spectrum and an unlicensed spectrum. Communication between the radio access network device 120 and the terminal device may be performed by using a spectrum below 6 gigahertz (gigahertz, GHz), a spectrum above 6 GHz, or both a spectrum below 6 GHz and a spectrum above 6 GHz. A spectrum resource used between the radio access network device 120 and the terminal device is not limited in this embodiment of this application.

An architecture of the mobile communications system shown in FIG. 1 is used as an example. In an existing LTE communications system, data transmitted between a network device and a terminal device is divided, at a physical layer, into data packets in a form of TBs. The TB is transmitted based on scheduling performed by the network device.

Specifically, the network device sends control information to the terminal device through a downlink control channel, to indicate, by using the control information, a hybrid automatic repeat request (hybrid automatic repeat request, HARQ) process number corresponding to a scheduled TB and scheduling information of the scheduled TB. The scheduling information includes resource allocation information (to be specific, a time domain resource and a frequency domain resource that are used), an MCS index, and the like of the scheduled TB. The downlink control channel may be, for example, a physical downlink control channel (physical downlink control channel, PDCCH) or a short physical downlink control channel (short physical downlink control channel, sPDCCH). The control information may be, for example, downlink control information (downlink control information, DCI).

In an LTE communications system, a scheduling unit of a time domain resource may be referred to as a time unit, or may be referred to as transmission duration (Transmission Duration). The time unit may include N symbols (symbol). Herein, N is a positive integer. A time length of the time unit is not limited in this application. In other words, a value of N is not limited. For example, one time unit may be one subframe whose duration is 1 millisecond (millisecond, ms). To be specific, when scheduling a TB, the network device needs to allocate at least one subframe to the TB. One subframe may include two slots, one subframe includes 12 or 14 symbols, and one slot may include six or seven time domain symbols (symbol). It should be noted that a physical meaning of a transmission time interval (transmission time interval, TTI) is basically the same as that of a subframe. Unless otherwise specified, in this embodiment of this application, the subframe may be equivalent to the TTI.

It may be understood that a time length of one symbol is not limited in this embodiment of this application. For example, for different subcarrier spacings, one symbol may have different lengths. Usually, symbols include an uplink symbol and a downlink symbol. The uplink symbol may be, for example, a single carrier frequency division multiple access (single carrier-frequency division multiple access, SC-FDMA) symbol or an orthogonal frequency division multiplexing (orthogonal frequency division multiplexing, OFDM) symbol, and the downlink symbol may be, for example, an OFDM symbol. It should be noted that, if a new uplink multiple access manner or downlink multiple access manner is introduced in a subsequent technology, the term "symbol" may be still used. The uplink multiple access manner and the downlink multiple access manner are not limited in this application.

To meet a transmission requirement of low-latency service data, a smaller scheduling unit is introduced in the LTE communications system. For example, one time unit may be one slot, one mini-slot (mini-slot), two or three time domain symbols, or the like. To be specific, when scheduling a TB, the network device may allocate, to the TB, a time domain resource less than one subframe. In this embodiment of this application, a scheduling unit of a time domain resource less than 1 ms is referred to as a short transmission time interval (short transmission time interval, sTTI) or short transmission duration (short transmission duration, STD). The sTTI is used as an example for description in this application subsequently. FIG. 2A is a schematic diagram of an existing sTTI. As shown in FIG. 2A, for example, the sTTI includes two or three time domain symbols. One subframe may be divided into six sTTIs that each have a length of two symbols or three symbols.

It may be understood that a length of a subframe, a length of a slot, and a length of an sTTI in a future communications system may be the same as those in the LTE communications system, or may be different from those in the LTE communications system. For example, in a future 5G communications system, one subframe may be 1 ms, and include one, two, four, eight, 16, or 32 slots, one slot may include 12 or 14 symbols, and one sTTI may include two, three, or seven symbols.

In the existing LTE communications system, the network device may allocate, in an allocation manner of a downlink resource allocation type 0 or a downlink resource allocation type 2, a frequency domain resource used to transmit a downlink TB. Details are as follows.

Downlink resource allocation type 0: When the network device allocates the frequency domain resource in the allocation manner of the downlink resource allocation type 0, a scheduling unit of the frequency domain resource may be an RBG. A quantity of RBs included in each RBG is P (in other words, an RBG granularity is P). A correspondence among a value of P, a length of a time unit, and system bandwidth of a communications system may be shown in Table 1. It may be understood that the system bandwidth described herein is a maximum frequency width that can be used when the network device and the terminal device in the communications system perform data transmission.

Table 1

| System bandwidth (MHz) | Quantity of RBs included in system bandwidth | RBG granularity P | |
| --- | --- | --- | --- |
| | | 1 ms TTI | sTTI |
| 5 | 25 | 2 | 6 |
| 10 | 50 | 3 | 6 |
| 15 | 75 | 4 | 12 |
| 20 | 100 | 4 | 12 |

It should be noted that when the scheduling unit (namely, the time unit) of the time domain resource is a TTI, if a quantity of RBs included in the system bandwidth cannot be exactly divided by P, a quantity of RBs included in the last RBG may be less than P. When the scheduling unit (namely, the time unit) of the time domain resource is an sTTI, if a quantity of RBs included in the system bandwidth cannot be exactly divided by P, a quantity of RBs included in the last RBG may be greater than P, to reduce a quantity of bits occupied by resource allocation information in control information.

In this scenario, the network device may use the control information to carry a bitmap, to indicate a frequency domain resource allocated to a scheduled TB. In other words, the resource allocation information includes the bitmap. One bit corresponds to one RBG. In other words, a quantity of bits occupied by the bitmap is the same as a quantity of RBGs included in the system bandwidth. When an RBG is allocated to the scheduled TB, a value of a bit corresponding to the RBG is 1. When an RBG is not allocated to the scheduled TB, a value of a bit corresponding to the RBG is 0. Therefore, the terminal device may learn, based on the bitmap in the control information sent by the network device, of the frequency domain resource allocated by the network device to the scheduled TB.

FIG. 2B is a schematic diagram 1 of existing frequency domain resource allocation. As shown in FIG. 2B, for example, system bandwidth is 5 MHz, and a scheduling unit of a time domain resource is a 1 ms TTI. In this case, an RBG granularity P is equal to 2. In other words, the system bandwidth includes 13 RBGs, each of the first 12 RBGs includes two RBs, and the thirteenth RBG includes one RB. A bitmap occupies 13 bits. It is assumed that frequency domain resources allocated by a network device to a scheduled TB are the first RBG, the fourth RBG, the fifth RBG, the sixth RBG, the eighth RBG, and the thirteenth RBG. In this case, the bitmap may be 1001110100001.

FIG. 2C is a schematic diagram 2 of existing frequency domain resource allocation. As shown in FIG. 2C, for example, system bandwidth is 5 MHz, and a scheduling unit of a time domain resource is an sTTI. In this case, an RBG granularity P is equal to 6. In other words, the system bandwidth includes four RBGs, each of the first three RBGs includes six RBs, and the fourth RBG includes seven RB. A bitmap occupies 4 bits. It is assumed that frequency domain resources allocated by a network device to a scheduled TB are the first RBG and the third RBG. In this case, the bitmap may be 1010.

Downlink resource allocation type 2: When the network device allocates the frequency domain resource in the allocation manner of the downlink resource allocation type 2, the frequency domain resources allocated by the network device to the scheduled TB are a segment of contiguous RBs. Therefore, when the network device allocates the frequency domain resource in the allocation manner of the downlink resource allocation type 2, the allocated frequency domain resource may be determined based on a frequency domain resource size and a start location of the frequency domain resource. The frequency domain resource size herein is a quantity of RBs.

For example, the scheduling unit of the time domain resource is a 1 ms TTI. Assuming that a quantity of RBs corresponding to the system bandwidth is N, a quantity of schemes for the frequency domain resource that can be allocated by the network device to the scheduled TB is shown in Table 2.

**Table 2**

| Frequency domain resource size | Start location of a frequency domain resource | Quantity of schemes for an allocable frequency domain resource |
|---|---|---|
| one RB | Any one of an RB #0 to an RB #N-1 | N |
| two RBs | Any one of an RB #0 to an RB #N-2 | N-1 |
| ... | ... | ... |
| k RBs | Any one of an RB #0 to an RB #N-k | N-k+1 |
| ... | ... | ... |
| N RBs | RB #0 | 1 |

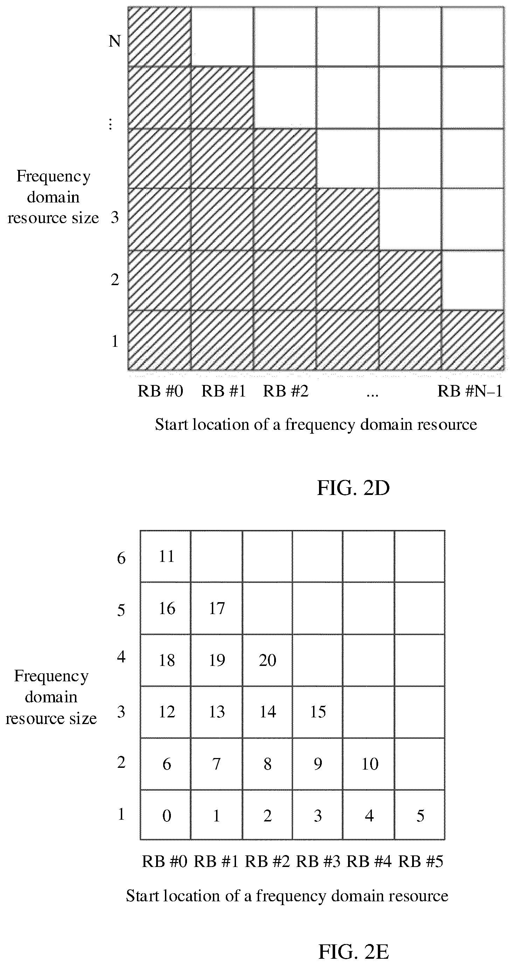

FIG. 2D is a schematic diagram 3 of existing frequency domain resource allocation. As shown in FIG. 2D, each grid represents one RB, and a grid filled with slashes indicates that a combination of a corresponding frequency domain resource size and a corresponding start location of a frequency domain resource is feasible. In other words, the network device may allocate, to a scheduled TB, the frequency domain resource indicated by the start location of the frequency domain resource and the frequency domain resource size. A grid that is not filled with slashes indicates that a combination of a corresponding frequency domain resource size and a corresponding start location of a frequency domain resource is infeasible. In other words, because the start location is located after other start locations, the network device cannot allocate, to a scheduled TB in an RB corresponding to system bandwidth, the frequency domain resource indicated by the start location of the frequency domain resource and the frequency domain resource size.

In this scenario, the network device may use the control information to carry an RIV, to indicate the frequency domain resource allocated to the scheduled TB. In other words, resource allocation information includes the RIV. With reference to FIG. 2D and Table 2, it can be learned that there are a total of $N(N+1)/2 = C_{N+1}^2$ schemes for the frequency domain resource that can be allocated by the network device to the scheduled TB. Therefore, $\left\lceil \log_2 C_{N+1}^2 \right\rceil$ bits in the control information may be occupied to indicate the RIV.

The RIV may be calculated according to a size of the frequency domain resource allocated by the network device to the scheduled TB, a start location of the frequency domain resource, and a predefined rule. Therefore, after receiving the control information carrying the RIV, the terminal device may reversely derive the frequency domain resource size and the start location of the frequency domain resource based on the RIV, so that the frequency domain resource used for the scheduled TB can be further determined.

FIG. 2E is a schematic diagram 4 of existing frequency domain resource allocation. As shown in FIG. 2E, for example, N is 6, and a scheduling unit of a time domain resource is a 1 ms TTI. A network device may calculate an RIV according to the following two formulas:

$$\mathrm{RIV} = \mathrm{N}(\mathrm{x} - 1) + \mathrm{y} \qquad (1);$$

and

$$\mathrm{RIV} = \mathrm{N}(\mathrm{N} - \mathrm{x} - 1) + (\mathrm{N} - 1 - \mathrm{y}) \qquad (2)$$

Herein, N is a quantity of RBs included in system bandwidth, x is a size of a frequency domain resource allocated by the network device to a scheduled TB, and y is a start location of the frequency domain resource allocated by the network device to the scheduled TB. When $\mathrm{x} \leq \frac{\mathrm{N}}{2}+1$, an RIV of the frequency domain resource allocated to the scheduled TB is calculated according to the formula (1); or when $x > \frac{N}{2}+1$, an RIV of the frequency domain resource allocated to the scheduled TB is calculated according to the formula (2).

In this example, a grid filled with a number indicates that a combination of a corresponding frequency domain resource size and a corresponding start location of a frequency domain resource is feasible. The number in the grid is an RIV of the frequency domain resource corresponding to the combination, and $\lceil \log_2 C_7^2 \rceil$ bits in control information are occupied to indicate the RIV. Correspondingly, after receiving the RIV, the terminal device may determine, based on a quotient and a remainder that are obtained by dividing the RIV by N, the size of the frequency domain resource allocated by the network device to the scheduled TB and the start location of the frequency domain resource. For details, refer to the prior art. Details are not described herein.

When the scheduling unit of the time domain resource is an sTTI, for a manner in which the network device allocates a frequency domain resource to the scheduled TB and calculates an RIV of the frequency domain resource, refer to the foregoing manner in which when the scheduling unit of the time domain resource is a 1 ms TTI, the network device allocates the frequency domain resource to the scheduled TB and calculates the RIV of the frequency domain resource. Details are not described herein again. Correspondingly, in the existing LTE communications system, the network device may allocate, in an allocation manner of an uplink resource allocation type 0, a frequency domain resource used to transmit uplink data. Because principles in the uplink resource allocation type 0 and the downlink resource allocation type 2 are basically the same, details are not described herein again.

To cope with future explosive growth of mobile data traffic, connections of massive mobile communications devices, and continuously emerging new services and application scenarios, a 5G communications system that can support a plurality of services emerges. The 5G communications system may support different services, for example, an enhanced mobile broadband (enhanced Mobile Broadband, eMBB) service, a massive machine type communication (massive machine type communication, MTC) service, a URLLC service, a multimedia broadcast multicast service (multimedia broadcast multicast service, MBMS), and a positioning service.

The URLLC service is an important service in the 5G communications system, and requires very high reliability and a very low latency during transmission. For example, a transmission latency is required to be within 1 ms, and a success probability (namely, reliability) is required to reach 99.999%. Alternatively, a transmission latency is required to be within 10 ms, and a success probability (namely, reliability) is required to reach 99.99%. If reliability of a control channel in an LTE communications system continues to be used in the 5G communications system, a reliability requirement of the URLLC service cannot be met.

Currently, a manner in which control information is compressed to enhance reliability of a control channel in a 5G communications system has been adopted in a standard. To be specific, some information (for example, resource allocation information) in the control information is compressed, to reduce a payload size of the control information. In this way, on a same time-frequency resource, redundant information transmitted when compressed DCI is transmitted is more than redundant information transmitted when uncompressed DCI is transmitted. Because the redundancy information can play a check function, reliability of the control channel can be improved by transmitting more redundancy information, to meet the reliability requirement of the URLLC service. Although the manner in which the control information is compressed to enhance reliability of the control channel in the 5G communications system has been adopted in the standard, a manner of reducing a quantity of bits occupied by the resource allocation information in the control information is not limited currently.

The URLLC service relates to low-latency service data, and a time domain resource for transmitting the URLLC service data may be scheduled by using a scheduling unit sTTI. Therefore, it is proposed in a current standard that when a network device allocates, in the allocation manner of the downlink resource allocation type 0, a frequency domain resource used to transmit a scheduled TB (namely, the URLLC service data), a quantity of bits occupied by resource allocation information may be reduced by increasing an RBG granularity. For example, a correspondence among a value of an RBG granularity P, a length of a time unit, and system bandwidth of a communications system may be shown in Table 3.

**Table 3**

| System bandwidth (MHz) | Quantity of RBs included in system bandwidth | RBG granularity P | | Quantity of bits occupied by a bitmap in resource allocation information | |
|---|---|---|---|---|---|
| | | 1 ms TTI | sTTI | 1 ms TTI | sTTI |
| 5 | 25 | 2 | 6 | 13 | 4 |

(continued)

| System bandwidth (MHz) | Quantity of RBs included in system bandwidth | RBG granularity P | | Quantity of bits occupied by a bitmap in resource allocation information | |
| --- | --- | --- | --- | --- | --- |
| | | 1 ms TTI | sTTI | 1 ms TTI | sTTI |
| 10 | 50 | 3 | 6 | 17 | 8 |
| 15 | 75 | 4 | 12 | 19 | 6 |
| 20 | 100 | 4 | 12 | 25 | 8 |

When the network device allocates, in the allocation manner of the downlink resource allocation type 2 or the uplink resource allocation type 0, a frequency domain resource used to transmit a scheduled TB (namely, the URLLC service data), the network device may change a manner of allocating contiguous RBs to the terminal device in the original LTE communications system to a manner of allocating contiguous RBGs. Allocating contiguous RBGs may reduce a quantity of schemes for the frequency domain resource that can be allocated by the network device. A quantity of bits in the control information that are occupied by the RIV is positively correlated with the quantity of schemes for the frequency domain resource that can be allocated by the network device (to be specific, when the quantity of bits occupied by the RIV increases or decreases, the quantity of schemes for the frequency domain resource that can be allocated by the network device to to-be-transmitted data also increases or decreases accordingly). Therefore, in this manner, the quantity of bits occupied by the resource allocation information can be reduced.

For example, the network device allocates, in the allocation manner of the downlink resource allocation type 2, the frequency domain resource used to transmit the scheduled TB (namely, the URLLC service data). A correspondence among system bandwidth of a communications system, a value of an RBG granularity P, and a quantity of bits occupied by an RIV may be shown in Table 4.

**Table 4**

| System bandwidth (MHz) | Quantity of RBs included in system bandwidth | RBG granularity P | | Quantity of bits occupied by an RIV in resource allocation information | |
| --- | --- | --- | --- | --- | --- |
| | | 1 ms TTI | sTTI | 1 ms TTI | sTTI |
| 5 | 25 | 1 | 4 | 9 | 6 |
| 10 | 50 | 1 | 6 | 11 | 6 |
| 15 | 75 | 1 | 4 | 12 | 8 |
| 20 | 100 | 1 | 4 | 13 | 9 |

In the foregoing manner, the quantity of bits occupied by the resource allocation information in the control information may be reduced to some extent, but the resource allocation information still occupies a relatively large quantity of bits, resulting in relatively low reliability of the control information.

A size of the frequency domain resource allocated by the network device to the scheduled TB is directly proportional to a size of the TB, and is inversely proportional to channel quality of the terminal device. When the URLLLC service data is transmitted, a size of a TB obtained through division performed at a MAC layer for a physical layer changes slightly. For example, the size of the TB is about 256 bits. Therefore, the size of the frequency domain resource allocated by the network device to the scheduled TB depends on the channel quality. Therefore, an embodiment of this application provides an information transmission method. A second communications apparatus configures, for a first communications apparatus by using higher layer signaling, a frequency domain resource size set that includes some frequency domain resource sizes supported by system bandwidth, so that the second communications apparatus may allocate, to the first communications apparatus, a frequency domain resource corresponding to a frequency domain resource size in the frequency domain resource size set. An RIV corresponding to the frequency domain resource is used to indicate the frequency domain resource. A quantity of bits occupied by the RIV is positively correlated with a quantity of schemes for a frequency domain resource that can be allocated by the second communications apparatus to a scheduled TB (to be specific, when the quantity of bits occupied by the RIV increases or decreases, a quantity of schemes for a frequency domain resource that can be allocated by the network device to to-be-transmitted data also increases or decreases accordingly). Therefore, the quantity of schemes for the frequency domain resource that can be allocated by the second communications apparatus to the scheduled TB is reduced, so that a quantity of bits occupied by resource allocation information in control information can be further reduced, to further improve reliability of the control information.

It should be noted that the first communications apparatus in the method in this embodiment of this application may be a terminal device, or may be a chip in the terminal device. The second communications apparatus in the method in this embodiment of this application may be a network device, or may be a chip in the network device. In the following description of this application, that the first communications apparatus is a terminal device and the second communications apparatus is a network device is used as an example to describe in detail the technical solutions of this application by using some embodiments. The following several embodiments may be combined with each other, and a same or similar concept or process may not be described repeatedly in some embodiments.

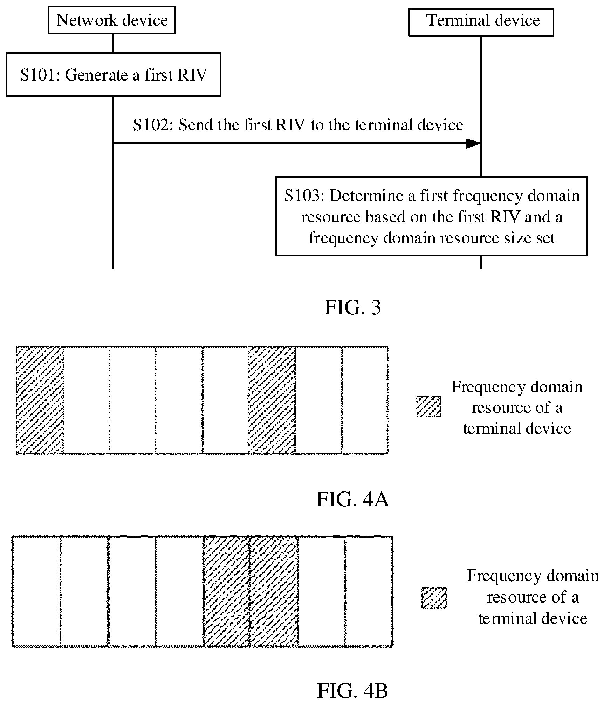

FIG. 3 is a signaling flowchart of an information transmission method according to an embodiment of this application. As shown in FIG. 3, the method may include the following steps:

S101: A network device generates a first RIV.

S102: The network device sends the first RIV to a terminal device.

S103: The terminal device receives the first RIV.

S104: The terminal device determines a first frequency domain resource based on the first RIV and a frequency domain resource size set.

The method provided in this embodiment of this application may be applied to a scenario in which a frequency domain resource used to transmit downlink data is allocated in an allocation manner of a downlink resource allocation type 0 or a downlink resource allocation type 2, and is also applicable to a scenario in which a frequency domain resource used to transmit uplink data is allocated by using an uplink resource allocation type 0. In both scenarios, reliability of control information can be improved. Therefore, in the following description of this application, resource allocation types are not distinguished, and uplink data and downlink data are not distinguished. In addition, in this embodiment of this application, when URLLLC service data is transmitted, the URLLLC service data is divided into TBs at a MAC layer. Unless otherwise specified, in this embodiment of this application, the URLLLC service data and the TB are not specially distinguished, and both are represented by to-be-transmitted data.

The following describes, in different implementations, the method provided in this embodiment of this application.

Manner 1: The network device configures the frequency domain resource size set for the terminal device by using higher layer signaling. The frequency domain resource size set includes some frequency domain resource sizes supported by system bandwidth. The higher layer signaling herein may be, for example, radio resource control (radio resource control, RRC) signaling, medium access control (medium access control, MAC) control element (control element, CE) signaling, or the like.

Each frequency domain resource size in the frequency domain resource size set includes a different quantity of frequency domain resource units. The frequency domain resource unit herein is a scheduling unit of a frequency domain resource used when the network device performs data transmission with the terminal device, and may be specifically determined based on a configuration of a communications system. In this embodiment of this application, an example in which the frequency domain resource unit is an RBG is used for description.

In this embodiment, when to-be-transmitted data needs to be transmitted between the network device and the terminal device, the network device may select, based on current channel quality from the frequency domain resource size set, a frequency domain resource size that matches the current channel quality, and allocate, to the to-be-transmitted data, a frequency domain resource corresponding to the frequency domain resource size. In other words, for a frequency domain resource size that belongs to the frequency domain resource size set, the network device may allocate, to the terminal device, a frequency domain resource corresponding to the frequency domain resource size. For a frequency domain resource size that does not belong to the frequency domain resource size set, the network device cannot allocate, to the terminal device, a frequency domain resource corresponding to the frequency domain resource size.

The correspondence among a value of an RBG granularity P, a length of a time unit, and system bandwidth of a communications system that is shown in Table 3 is used as an example. It is assumed that the system bandwidth is 20 MHz, and a scheduling unit of a time domain resource is an sTTI. In this case, the RBG granularity P is equal to 12. In other words, the system bandwidth includes eight RBGs, each of the first seven RBGs includes 12 RBs, and the eighth RBG includes 16 RBs.

It is assumed that the frequency domain resource size set configured by the network device for the terminal device by using the higher layer signaling is {2, 4, 6, 8}. In an LTE communications system, the network device may allocate a frequency domain resource with any frequency domain resource size of one to eight RBGs to to-be-transmitted data. However, in this example, the network device can allocate only a frequency domain resource with any frequency domain resource size in the frequency domain resource size set to the to-be-transmitted data, for example, a frequency domain resource with a size of two RBGs, a frequency domain resource with a size of four RBGs, a frequency domain resource with a size of six RBGs, or a frequency domain resource with a size of eight RBGs. The network device cannot allocate, to the to-be-transmitted data, a frequency domain resource corresponding to a frequency domain resource size of one RBG, three RBGs, five RBGs, or seven RBGs.

In this scenario, there are a total of 127 schemes for the frequency domain resource that can be allocated by the network device to the to-be-transmitted data, including $C_8^2$, $C_8^4$, $C_8^6$, and $C_8^8$ schemes. Therefore, the network device may use 7 bits in resource allocation information to indicate an RIV of the first frequency domain resource. Still referring to Table 3, 1 bit can be saved in comparison with a quantity of bits occupied by a bitmap that is in existing resource allocation information and that indicates a frequency domain resource.

It is alternatively assumed that the frequency domain resource size set configured by the network device for the terminal device by using the higher layer signaling is {1, 8}. In an LTE communications system, the network device may allocate a frequency domain resource with any frequency domain resource size of one to eight RBGs to data to be transmitted between the network device and the terminal device. Different from that, in this example, the network device can allocate only a frequency domain resource with any frequency domain resource size in the frequency domain resource size set to the data to be transmitted between the network device and the terminal device, for example, a frequency domain resource with a size of one RBG or a frequency domain resource with a size of eight RBGs. The network device cannot allocate, to the data to be transmitted between the network device and the terminal device, a frequency domain resource corresponding to any one of frequency domain resource sizes of two RBGs to seven RBGs.

In this scenario, there are a total of nine schemes for the frequency domain resource that can be allocated by the network device to the data to be transmitted between the network device and the terminal device, including $C_8^1$ and $C_8^8$ schemes. Therefore, the network device may use 4 bits in resource allocation information to indicate an RIV of the first frequency domain resource. Still referring to Table 3, 4 bits can be saved in comparison with a quantity of bits occupied by a bitmap that is in existing resource allocation information and that indicates a frequency domain resource.

In this embodiment, the network device allocates, to the to-be-transmitted data, a first frequency domain resource corresponding to a first frequency domain resource size in the frequency domain resource size set. The first frequency domain resource size is a quantity of RBGs of the first frequency domain resource. Therefore, the network device may generate the first RIV used to indicate the first frequency domain resource. In this embodiment of this application, the network device may calculate the first RIV of the first frequency domain resource according to the following principle. Details are as follows:

RIVs of frequency domain resources corresponding to frequency domain resource sizes in the frequency domain resource size set start from 0, and the RIVs are contiguous. For example, if there are a total of 128 frequency domain resource allocation schemes corresponding to all frequency domain resource sizes in the frequency domain resource size set, values of the RIVs are 0 to 127.

A second RIV is used to indicate a second frequency domain resource, a quantity of frequency domain resource units of the second frequency domain resource is a second frequency domain resource size, and the second frequency domain resource size belongs to the frequency domain resource size set. When the second RIV is less than the first RIV, the second frequency domain resource size is less than or equal to the first frequency domain resource size. In other words, in the frequency domain resource size set, an RIV of a frequency domain resource with a smaller frequency domain resource size is less than an RIV of a frequency domain resource with a larger frequency domain resource size. For example, an RIV of a frequency domain resource with a size of two RBGs is less than an RIV of a frequency domain resource with a size of four RBGs.

Further, when the second frequency domain resource size is equal to the first frequency domain resource size, a number of the first frequency domain resource unit of the second frequency domain resource is greater than a number of the first frequency domain resource unit of the first frequency domain resource; or numbers of the first M frequency domain resource units of the second frequency domain resource are equal to numbers of the first M frequency domain resource units of the first frequency domain resource, and a number of the (M+1)$^{th}$ frequency domain resource unit of the second frequency domain resource is greater than a number of the (M+1)$^{th}$ frequency domain resource unit of the first frequency domain resource, where M is a positive integer. In other words, for a same frequency domain resource size, a larger value of a bitmap corresponding to a frequency domain resource indicates a larger RIV of the frequency domain resource. For example, the system bandwidth includes eight RBGs, and the frequency domain resource size is two RBGs. It is assumed that numbers of RBGs included in a frequency domain resource A are an RBG 0 and an RBG 1. In other words, a bitmap corresponding to the frequency domain resource A is 11000000. Numbers of RBGs included in a frequency domain resource B are an RBG 3 and an RBG 4. In other words, a bitmap corresponding to the frequency domain resource B is 00110000. Because 11000000 > 00110000, an RIV of the frequency domain resource A is greater than an RIV of the frequency domain resource B.

For example, the frequency domain resource size set configured by the network device for the terminal device by using the higher layer signaling is {$a_1$, $a_2$, ⋯, $a_n$}. Herein, $a_1 < a_2 < \cdots < a_n$. It is assumed that the first frequency domain resource size is $a_i$ RBGs, numbers of RBGs included in the first frequency domain resource are respectively #$M_1$, #$M_2$, ..., #$M_{a_i}$, and $M_1 < M_2 < \cdots < M_{a_i}$.

Referring to the foregoing principle for calculating the RIV, an RIV of a frequency domain resource corresponding to a size of $a_i$ RBGs needs to be greater than an RIV of a frequency domain resource corresponding to a frequency domain resource size that is less than the size of $a_i$ RBGs and that is in the frequency domain resource size set. Because there are a total of $C_N^{a_i}$ schemes for the first frequency domain resource that can be allocated by the network device to the to-be-transmitted data, a correspondence between a scheme for a frequency domain resource and an RIV may be shown in Table 5.

**Table 5**

| A scheme for a frequency domain resource | RIV |
|---|---|
| All schemes for allocating a frequency domain resource with a size of $a_1$ RBGs | $0 \; to \; \binom{N}{a_1} - 1$ |
| All schemes for allocating a frequency domain resource with a size of $a_2$ RBGs | $\binom{N}{a_1} \; to \; \sum\limits_{j=1}^{2} \binom{N}{a_j} - 1$ |
| ... | ... |
| All schemes for allocating a frequency domain resource with a size of $a_i$ RBGs | $\sum\limits_{j=1}^{i-1} \binom{N}{a_j} \; to \; \sum\limits_{j=1}^{i} \binom{N}{a_j} - 1$ |

It can be learned from Table 5 that if the first frequency domain resource size is $a_i$ RBGs, the first RIV of the first frequency domain resource may be represented according to the following formula (3):

$$\text{RIV} = \sum_{j=1}^{i-1} \binom{N}{a_j} + X \qquad\qquad (3)$$

Herein, $\binom{N}{a_j} = C_N^{a_j}$, $0 \le X \le \binom{N}{a_i} - 1$, $j$ is a positive integer, i represents a sorting location of the first frequency domain resource size in the frequency domain resource size set, N represents a quantity of RBGs included in the system bandwidth, and $a_j$ represents a frequency domain resource size whose sorting location is j in the frequency domain resource size set. For example, the frequency domain resource size set is {2, 4, 6, 8}. When $a_j$ is 4, j is equal to 2. To be specific, 4 is a frequency domain resource size whose sorting location is 2 in the frequency domain resource size set.

Referring to the foregoing principle for calculating the RIV, for a same frequency domain resource size, a larger value of a bitmap corresponding to a frequency domain resource indicates a larger RIV of the frequency domain resource. In other words, the RIV of the first frequency domain resource should be greater than RIVs of all frequency domain resources whose values of bitmaps are less than that of the first frequency domain resource. Numbers of RBGs included in the first frequency domain resource are respectively #$M_1$, #$M_2$, ..., and #$M_{a_i}$. Therefore, a value of X in the foregoing formula (3) may be further determined based on the numbers of the RBGs included in the first frequency domain resource. Details are as follows.

In schemes for all allocable frequency domain resources corresponding to the first frequency domain resource size, there are a total of $\binom{N - M_1 - 1}{a_i}$ schemes in which a number of the first RBG included in a frequency domain resource is greater than a number (namely, #$M_1$) of the first RBG of the first frequency domain resource. In other words, there are a total of $\binom{N-M_1-1}{a_i}$ schemes in which the number of the first RBG is greater than #$M_1$, for example, a scheme for a frequency domain resource whose first RBG is #$M_2$ in the schemes for all the allocable frequency domain resources corresponding to the first frequency domain resource size.

In the schemes for all the allocable frequency domain resources corresponding to the first frequency domain resource size, there are a total of $\binom{N-M_2-1}{a_i-1}$ schemes in which a number of the first RBG included in a frequency domain resource is equal to the number of the first RBG of the first frequency domain resource (in other words, the first RBG is also #$M_1$), but a number of the second RBG is greater than a number (namely, #$M_2$) of the second RBG of the first frequency domain resource. In other words, there are a total of $\binom{N-M_1-1}{a_i}$ schemes in which the number of the first RBG is equal to #$M_1$, and the number of the second RBG is greater than #$M_2$, for example, a scheme for a frequency domain resource whose first RBG is #$M_1$ and second RBG is #$M_3$ in the schemes for all the allocable frequency domain resources corresponding to the first frequency domain resource size.

It can be learned from the foregoing description that in the schemes for all the allocable frequency domain resources corresponding to the first frequency domain resource size, there are a total of $\binom{N-M_j-1}{a_i+1-j}$ schemes in which numbers of the first j-1 RBGs included in a frequency domain resource are equal to numbers of the first j-1 RBGs of the first frequency domain resource, but a number of the j$^{th}$ RBG is greater than a number of the j$^{th}$ RBG of the first frequency domain resource.

Therefore, for a same frequency domain resource size, there are a total of $\sum_{j=1}^{a_i} \binom{N-M_j-1}{a_i+1-j}$ frequency domain resources whose RIVs are less than the RIV of the first frequency domain resource. These frequency domain resources occupy RIVs from $\sum_{j=1}^{i-1} \binom{N}{a_j}$ to $\sum_{j=1}^{i-1} \binom{N}{a_j} + \sum_{j=1}^{a_i} \binom{N-M_j-1}{a_i+1-j} - 1$. Therefore, X in the foregoing formula (3) may be represented according to the following formula (4):

$$X = \sum_{j=1}^{a_i} \binom{N-M_j-1}{a_i+1-j} \qquad (4)$$

Herein, j is a positive integer, i represents a sorting location of the first frequency domain resource size in the frequency domain resource size set, N represents a quantity of RBGs included in the system bandwidth, $a_i$ represents the first frequency domain resource size, and $M_j$ represents a number of an RBG whose sorting location is j in the first frequency domain resource.

With reference to the formula (3) and the formula (4), the first RIV of the first frequency domain resource may be represented according to the following formula (5):

$$RIV = \sum_{j=1}^{i-1} \binom{N}{a_j} + \sum_{j=1}^{a_i} \binom{N-M_j-1}{a_i+1-j} \qquad (5)$$

In the foregoing manner of calculating the RIV, RIVs of frequency domain resources corresponding to all frequency domain resource sizes in the frequency domain resource size set may be contiguous, so that a largest value in the RIVs corresponding to the frequency domain resource size set occupies a smallest quantity of bits. Therefore, a quantity of bits occupied by resource allocation information that includes the RIV and that is in the control information can be reduced, and reliability of the control information is further improved.

For example, if all the frequency domain resource sizes in the frequency domain resource size set correspond to a total of 128 frequency domain resource allocation schemes that may be allocated, the RIV is calculated in the foregoing manner, so that values of RIVs of frequency domain resources corresponding to the frequency domain resource size set range from 0 to 127. In other words, a largest value in the RIVs corresponding to the frequency domain resource size set is 127. Therefore, the resource allocation information may use 7 bits to represent an RIV of a frequency domain resource corresponding to any frequency domain resource size in the frequency domain resource size set. If the RIV is not calculated in the foregoing manner, the largest value in the RIVs corresponding to the frequency domain resource size set may be greater than 127 (for example, the values of the RIVs range from 0 to 10 or range from 12 to 128). In this scenario, the resource allocation information may need more than 7 bits to represent an RIV of a frequency domain resource corresponding to any frequency domain resource size in the frequency domain resource size set. Consequently, additional overheads of the control information are caused, and reliability of the control information is reduced.

After calculating the first RIV of the first frequency domain resource in the foregoing manner, the network device may send control information including the first RIV to the terminal device. Correspondingly, after receiving the first RIV, the terminal device may determine the first frequency domain resource based on the first RIV and the frequency domain resource size set. Then, the terminal device may transmit the to-be-transmitted data to the network device by using the first frequency domain resource.

The manner in which the terminal device determines the first frequency domain resource based on the first RIV and the frequency domain resource size set is not limited in this embodiment. Table 5 and the foregoing formula (5) are still used as an example. For example, the terminal device may determine the first frequency domain resource in the following steps step by step. Details are as follows:

1. The terminal device may search the correspondence shown in Table 5 for the first frequency domain resource size corresponding to the first RIV, to obtain the first frequency domain resource size $a_i$.

2. The terminal device subtracts a smallest value $\sum_{j=1}^{i-1} \binom{N}{a_j}$ of an RIV in RIVs corresponding to "All schemes for allocating a frequency domain resource with a size of $a_1$ RBGs" in Table 5 from the first RIV, to obtain $RIV_1$, so as to further determine, based on $RIV_1$, specific RBGs included in the first frequency domain resource. Herein, $RIV_1$ may be represented according to the following formula (6):

$$RIV_1 = RIV - \sum_{j=1}^{i-1} \binom{N}{a_j} \qquad (6)$$

3. The terminal device calculates $M_j$ based on $RIV_1$ and the first frequency domain resource size $a_i$ according to the following formula (7). The formula (7) is shown as follows:

$$\binom{N-M_j-1}{a_i+1-j} \leq RIV_j \qquad (7)$$

Herein, j is a positive integer, and $M_j$ is a minimum nonnegative integer value that meets the foregoing formula (7). When j is greater than or equal to 1, $RIV_{j+1} = RIV_j - \binom{N-M_j-1}{a_i+1-j}$.

In specific implementation, the terminal device may first set a value of j to 1, and then substitute $RIV_1$ and the first frequency domain resource size $a_i$ into the formula, to determine the number of the first RBG in the first frequency domain resource. Then, the terminal device may add 1 to the value of j, that is, enable j to be equal to 2. Then $RIV_2$ and the first frequency domain resource size $a_i$ are substituted into the formula, to determine the number of the second RBG in the first frequency domain resource. This cycle is repeated, and the process ends until j is equal to $a_i$ + 1. Alternatively, the process ends after a number of the $a_i$th RBG of the first frequency domain resource is determined.

According to the foregoing manner, the terminal device can quickly determine, based on the first RIV sent by the network device and the frequency domain resource size set, the first frequency domain resource indicated by the first RIV, to reduce a time for processing control information by the terminal device, and further reduce a data transmission latency.

Optionally, in another embodiment, the network device may calculate the first RIV of the first frequency domain resource according to the following principle. Details are as follows:

RIVs of frequency domain resources corresponding to frequency domain resource sizes in the frequency domain resource size set start from 0, and the RIVs are contiguous. For example, if there are a total of 128 frequency domain resource allocation schemes corresponding to all frequency domain resource sizes in the frequency domain resource size set, values of the RIVs are 0 to 127.

A second RIV is used to indicate a second frequency domain resource, a quantity of frequency domain resource units of the second frequency domain resource is a second frequency domain resource size, and the second frequency domain resource size belongs to the frequency domain resource size set. When the second RIV is less than the first RIV, the second frequency domain resource size is less than or equal to the first frequency domain resource size. In other words, in the frequency domain resource size set, an RIV of a frequency domain resource with a smaller frequency domain resource size is less than an RIV of a frequency domain resource with a larger frequency domain resource size. For example, an RIV of a frequency domain resource with a size of two RBGs is less than an RIV of a frequency domain resource with a size of four RBGs.

Further, when the second frequency domain resource size is equal to the first frequency domain resource size, a number of the first frequency domain resource unit of the second frequency domain resource is smaller than a number of the first frequency domain resource unit of the first frequency domain resource; or numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is smaller than a number of the $(M+1)^{th}$ frequency domain resource unit of the first frequency domain resource, where M is a positive integer. In other words, for a same frequency domain resource size, a larger value of a bitmap corresponding to a frequency domain resource indicates a smaller RIV of the frequency domain resource. In other words, the RIV of the first frequency domain resource should be smaller than RIVs of all frequency domain resources whose values of bitmaps are less than that of the first frequency domain resource. For example, the system bandwidth includes eight RBGs, and the frequency domain resource size is two RBGs. It is assumed that numbers of RBGs included in a frequency domain resource A are an RBG 0 and an RBG 1. In other words, a bitmap corresponding to the frequency domain resource A is 11000000. Numbers of RBGs included in a frequency domain resource B are an RBG 3 and an RBG 4. In other words, a bitmap corresponding to the frequency domain resource B is 00110000. Because 11000000 > 00110000, an RIV of the frequency domain resource A is smaller than an RIV of the frequency domain resource B.

Referring to the foregoing example, in this scenario, the network device may further determine a value of X in the foregoing formula (3) based on the numbers of the RBGs included in the first frequency domain resource. Details are as follows.

In the schemes for all the allocable frequency domain resources corresponding to the first frequency domain resource size, there are a total of $\binom{N-M_1-1}{a_i}$ schemes in which a number of the first RBG included in a frequency domain resource is greater than a number (namely, $\#M_1$) of the first RBG of the first frequency domain resource. In other words, there are a total of $\binom{N-M_1-1}{a_i}$ schemes in which the number of the first RBG is greater than $\#M_1$, for example, a scheme for a frequency domain resource whose first RBG is $\#M_2$ in the schemes for all the allocable frequency domain resources corresponding to the first frequency domain resource size.

In the schemes for all the allocable frequency domain resources corresponding to the first frequency domain resource size, there are a total of $\binom{N-M_2-1}{a_i-1}$ schemes in which a number of the first RBG included in a frequency domain resource is equal to the number of the first RBG of the first frequency domain resource (in other words, the first RBG is also $\#M_1$), but a number of the second RBG is greater than a number (namely, $\#M_2$) of the second RBG of the first frequency domain resource. In other words, there are a total of $\binom{N-M_1-1}{a_i}$ schemes in which the number of the first RBG is equal to $\#M_1$, and the number of the second RBG is greater than $\#M_2$, for example, a scheme for a frequency domain resource whose first RBG is $\#M_1$ and second RBG is $\#M_3$ in the schemes for all the allocable frequency domain resources corresponding to the first frequency domain resource size.

It can be learned from the foregoing description that in the schemes for all the allocable frequency domain resources corresponding to the first frequency domain resource size, there are a total of $\binom{N-M_j-1}{a_i+1-j}$ schemes in which numbers of the first j-1 RBGs included in a frequency domain resource are equal to numbers of the first j-1 RBGs of the first frequency domain resource, but a number of the $j^{th}$ RBG is greater than a number of the $j^{th}$ RBG of the first frequency domain resource.

Therefore, for a same frequency domain resource size, there are a total of $\sum_{j=1}^{a_i} \binom{N-M_j-1}{a_i+1-j}$ frequency domain resources whose RIVs are less than the RIV of the first frequency domain resource. These frequency domain resources occupy RIVs from $\sum_{j=1}^{i} \binom{N}{a_j} - \sum_{j=1}^{a_i} \binom{N-M_j-1}{a_i+1-j}$ to $\sum_{j=1}^{i} \binom{N}{a_j} - 1$. Therefore, X in the foregoing formula (3) may be represented according to the following formula (8):

$$X = \binom{N}{a_i} - \sum_{j=1}^{a_i} \binom{N-M_j-1}{a_i+1-j} - 1 \qquad (8)$$

Herein, j is a positive integer, i represents a sorting location of the first frequency domain resource size in the frequency domain resource size set, N represents a quantity of RBGs included in the system bandwidth, $a_i$ represents a first frequency domain resource size, and $M_j$ represents a number of an RBG whose sorting location is j in the frequency domain resource size set.

With reference to the formula (3) and the formula (8), the first RIV of the first frequency domain resource may be represented according to the following formula (9):

$$\text{RIV} = \sum_{j=1}^{i} \binom{N}{a_j} - \sum_{j=1}^{a_i} \binom{N-M_j-1}{a_i+1-j} - 1 \qquad (9)$$

According to the foregoing manner of calculating the RIV, RIVs of frequency domain resources corresponding to all frequency domain resource sizes in the frequency domain resource size set may be contiguous, so that a largest value in the RIVs corresponding to the frequency domain resource size set occupies a smallest quantity of bits. Therefore, a quantity of bits occupied by resource allocation information that includes the RIV and that is in the control information can be reduced, and reliability of the control information is further improved.

For example, if all the frequency domain resource sizes in the frequency domain resource size set correspond to a total of 128 schemes for allocable frequency domain resources, the RIV is calculated in the foregoing manner, so that values of RIVs of frequency domain resources corresponding to the frequency domain resource size set range from 0 to 127. In other words, a largest value in the RIVs corresponding to the frequency domain resource size set is 127. Therefore, the resource allocation information may use 7 bits to represent an RIV of a frequency domain resource corresponding to any frequency domain resource size in the frequency domain resource size set. If the RIV is not calculated in the foregoing manner, the largest value in the RIVs corresponding to the frequency domain resource size set may be greater than 127 (for example, the values of the RIVs range from 0 to 10 or range from 12 to 128). In this scenario, the resource allocation information may need more than 7 bits to represent an RIV of a frequency domain resource corresponding to any frequency domain resource size in the frequency domain resource size set. Consequently, additional overheads of the control information are caused, and reliability of the control information is reduced.

After calculating the first RIV of the first frequency domain resource in the foregoing manner, the network device may send control information including the first RIV to the terminal device. Correspondingly, after receiving the first RIV, the terminal device may determine the first frequency domain resource based on the first RIV and the frequency domain resource size set. Then, the terminal device may transmit the to-be-transmitted data to the network device by using the first frequency domain resource.

The manner in which the terminal device determines the first frequency domain resource based on the first RIV and the frequency domain resource size set is not limited in this embodiment. Table 5 and the foregoing formula (9) are still used as an example. For example, the terminal device may determine the first frequency domain resource in the following steps step by step. Details are as follows:

1. The terminal device may search the correspondence shown in Table 5 for the first frequency domain resource size corresponding to the first RIV, to obtain the first frequency domain resource size $a_i$.

2. The terminal device subtracts a smallest value $\sum_{j=1}^{i-1} \binom{N}{a_j}$ of an RIV in RIVs corresponding to "All schemes for allocating a frequency domain resource with a size of $a_1$ RBGs" in Table 5 from the first RIV, to obtain $\text{RIV}_1$, so as to further determine, based on $\text{RIV}_1$, RBGs included in the first frequency domain resource. Herein, $\text{RIV}_1$ may be represented according to the following formula (10):

$$\text{RIV}_1 = \sum_{j=1}^{i} \binom{N}{a_j} - \text{RIV} - 1 \qquad (10)$$

3. The terminal device calculates $M_j$ based on $\text{RIV}_1$ and the first frequency domain resource size $a_j$ according to the following formula (11). The formula (11) is shown as follows:

$$\binom{N-M_j-1}{a_i+1-j} \leq RIV_j \qquad (11)$$

Herein, j is a positive integer, and $M_j$ is a minimum nonnegative integer value that meets the foregoing formula (11). When j is greater than or equal to 1, $RIV_{j+1} = RIV_j - \binom{N-M_j-1}{a_i+1-j}$.

In specific implementation, the terminal device may first set a value of j to 1, and then substitute $RIV_1$ and the first frequency domain resource size $a_i$ into the formula, to determine the number of the first RBG in the first frequency domain resource. Then, the terminal device may add 1 to the value of j, that is, enable j to be equal to 2. Then $RIV_2$ and the first frequency domain resource size $a_i$ are substituted into the formula, to determine the number of the second RBG in the first frequency domain resource. This cycle is repeated, and the process ends until j is equal to $a_i + 1$. Alternatively, the process ends after a number of the $a_i^{th}$ RBG of the first frequency domain resource is determined.

According to the foregoing manner, the terminal device can quickly determine, based on the first RIV sent by the network device and the frequency domain resource size set, the first frequency domain resource indicated by the first RIV, to reduce a time for processing control information by the terminal device, and further reduce a data transmission latency.

After the terminal device obtains, in the foregoing manner, numbers of all RBGs that form the first frequency domain resource, the terminal device may determine the first frequency domain resource allocated by the network device, and then may transmit the to-be-transmitted data to the network device by using the first frequency domain resource. For example, the terminal device sends the to-be-transmitted data to the network device on the first frequency domain resource, or receives the to-be-transmitted data sent by the network device on the first frequency domain resource.

In this embodiment, the network device may configure, for the terminal device by using higher layer signaling, a frequency domain resource size set that includes some frequency domain resource sizes supported by the system bandwidth, so that the network device may allocate, to to-be-transmitted data, a frequency domain resource corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

It may be understood that in the foregoing embodiment, a is equivalent to *a*, and i is equivalent to i. In this embodiment of this application, a and *a* are not distinguished, and i and i are not distinguished.

In addition, corresponding to the downlink resource allocation type 0, although in the prior art shown in Table 3, the quantity of bits occupied by the resource allocation information may be further reduced by increasing an RBG granularity. However, a larger RBG granularity P indicates poorer scheduling flexibility. If a quantity of RBGs actually required for data transmission is not a multiple of an RBG granularity, some RBGs are wasted, and frequency resource utilization is relatively low. However, according to the method provided in this embodiment of this application, the quantity of bits occupied by the resource allocation information can be reduced while the RBG granularity remains unchanged, scheduling flexibility is retained, and frequency resource utilization is improved. FIG. 4A is a schematic diagram 1 of a frequency domain resource distribution according to an embodiment of this application. FIG. 4B is a schematic diagram 2 of a frequency domain resource distribution according to an embodiment of this application. As shown in FIG. 4A, for example, a frequency domain resource with a size of two RBGs is allocated to the terminal device. When the method provided in this embodiment of this application is used, the frequency domain resource allocated by the network device to the terminal device may be shown in FIG. 4A. However, when a frequency domain resource is allocated to the terminal device by increasing the RBG granularity, the frequency domain resource allocated by the network device to the terminal device may be shown in FIG. 4B. It can be learned from the two figures that a larger RBG granularity P indicates poorer scheduling flexibility and lower frequency resource utilization.

Manner 2: The network device configures a frequency domain resource size set for the terminal device by using higher layer signaling. The frequency domain resource size set may include all frequency domain resource sizes or some frequency domain resource sizes supported by system bandwidth. The frequency domain resource unit herein is a scheduling unit of a frequency domain resource used when the network device performs data transmission with the terminal device, and may be specifically determined based on a configuration of a communications system. In this embodiment of this application, an example in which the frequency domain resource unit is an RBG is used for description.

In addition, for descriptions of the higher layer signaling, refer to the foregoing examples. Details are not described herein again.

In this embodiment, when a frequency domain resource size in the frequency domain resource size set is greater than or equal to a predefined size and less than a frequency domain resource size corresponding to the system bandwidth, the frequency domain resource size corresponds to a proper subset of the frequency domain resource pattern set corresponding to the frequency domain resource size. Optionally, when a frequency domain resource size in the frequency domain resource size set is less than a predefined size, the frequency domain resource size corresponds to a frequency domain resource pattern set corresponding to the frequency domain resource size, or a proper set. This is not limited herein. The frequency domain resource pattern set corresponding to the frequency domain resource size includes all frequency domain resource patterns supported by the frequency domain resource size. Each RBG included in each frequency domain resource pattern is an RBG included in the system bandwidth. One frequency domain resource pattern corresponds to one frequency domain resource allocation scheme.

That is, in this embodiment, when the network device allocates the frequency domain resource to the to-be-transmitted data based on a frequency domain resource size that is greater than or equal to the predefined size and less than the frequency domain resource size corresponding to the system bandwidth, the network device can allocate only a frequency domain resource corresponding to a frequency domain pattern in the proper subset, and cannot allocate a frequency domain resource corresponding to a frequency domain pattern other than the proper subset to the to-be-transmitted data. However, in Manner 1, the network device may allocate any frequency domain pattern corresponding to the frequency domain resource size in the frequency domain resource size set.

The predefined size described above may be specifically determined based on a configuration of the communications system. For example, the predefined size may be equal to a half of a quantity of frequency domain resource units included in the system bandwidth. When a half of the quantity of frequency domain resource units included in the system bandwidth is a non-integer, the predefined size may be the non-integer, or a value obtained by rounding up or rounding down the non-integer. For example, if the quantity of frequency domain resource units included in the system bandwidth is 7, the predefined size may be 3.5, or may be four (a value obtained by rounding up 3.5), or may be 3 (a value obtained by rounding down 3.5).

The correspondence among a value of an RBG granularity P, a length of a time unit, and system bandwidth of a communications system shown in Table 3 is used as an example. It is assumed that the system bandwidth is 20 MHz, and the network device allocates a frequency domain resource in the allocation manner of the downlink resource allocation type 0. In this case, the RBG granularity P is equal to 12. In other words, the system bandwidth includes eight RBGs, each of the first seven RBGs includes 12 RBs, and the eighth RBG includes 16 RBs. It is assumed that the predefined size is a half of the quantity of frequency domain resource units included in the system bandwidth. To be specific, the predefined size is four.

It is assumed that the frequency domain resource size set configured by the network device for the terminal device by using higher layer signaling is {4, 5, 6, 7, 8}. When allocating the frequency domain resource in Manner 1, the network device may allocate, to the to-be-transmitted data, any frequency domain pattern corresponding to any frequency domain resource size in the frequency domain resource size set. However, in this example, because each frequency domain resource size in the set is greater than or equal to the predefined size, the network device may allocate, to the to-be-transmitted data, only a frequency domain resource pattern in a proper subset corresponding to any frequency domain resource size in the frequency domain resource size set.

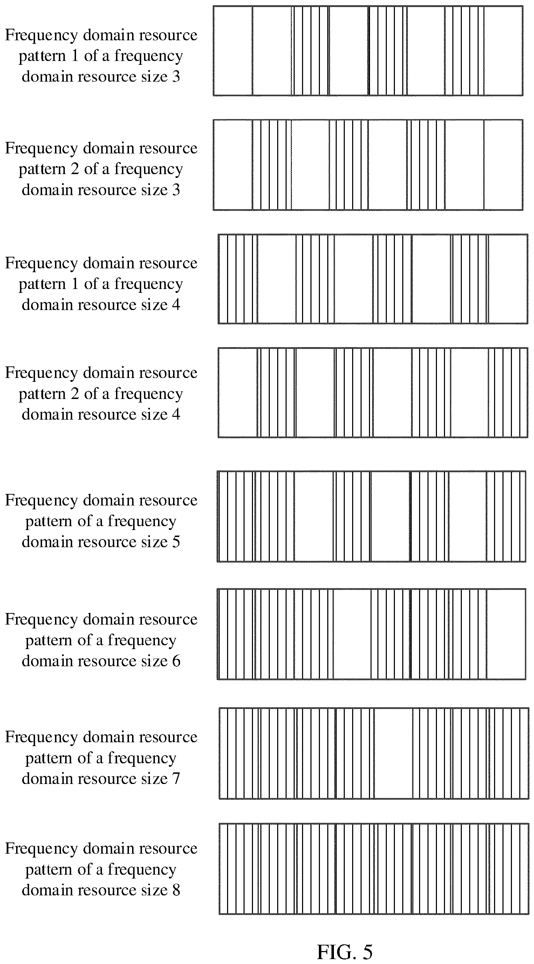

FIG. 5 is a schematic diagram 3 of a frequency domain resource distribution according to an embodiment of this application. As shown in FIG. 5, it is assumed that a proper subset of a frequency domain resource pattern set of a frequency domain resource size 4 includes two frequency domain resource patterns that are respectively a frequency domain resource pattern 1 and a frequency domain resource pattern 2, and a proper subset of a frequency domain resource pattern set of a remaining frequency domain resource size includes only one frequency domain resource pattern. In other words, in this example, a network device may allocate a total of six frequency domain resources to to-be-transmitted data.

It may be understood that FIG. 5 is merely an example. A proper subset of a frequency domain resource pattern set corresponding to a frequency domain resource size in this embodiment of this application is not limited thereto. For example, it may be specified that when a first frequency domain resource size is greater than or equal to a predefined size, for each frequency domain resource pattern included in the proper subset, frequency domain resource units in system bandwidth that do not belong to the frequency domain resource pattern are discontiguous; and/or when the first frequency domain resource size is less than the predefined size, frequency domain resource units in each frequency domain resource pattern included in the proper subset are discontiguous. In a possible design, when the first frequency domain resource size is greater than the predefined size, it may be specified that the proper subset includes only one frequency domain resource pattern. In this case, RBGs in the frequency domain resource pattern included in the proper subset may be evenly distributed in the system bandwidth.

Transmission performance existing when a plurality of best RBGs in the system bandwidth are selected (which may also be referred to as frequency selection) and transmission performance existing when RBGs in the system bandwidth are evenly selected (which may also be referred to as frequency diversity) have a relatively small difference. In other words, transmission performance is not significantly reduced when data is transmitted in a frequency diversity manner. Therefore, a frequency domain resource size is configured in the foregoing manner, so that even if the network device cannot learn of quality of a channel between the network device and a terminal device, the network device may still allocate, to the terminal device, a frequency domain resource that can ensure transmission performance, to ensure data transmission performance.

In the frequency domain resource size set in this embodiment, some frequency domain resource sizes correspond to a proper subset of a frequency domain resource pattern set. In other words, a quantity of schemes for the frequency domain resource that can be allocated by the network device to the to-be-transmitted data is further reduced. Therefore, the network device may use fewer bits in the resource allocation information to indicate an RIV of a scheduled frequency domain resource without loss (or slight loss) of transmission performance and flexibility of the size of the frequency domain resource, to further reduce a quantity of bits occupied by the resource allocation information in the control information, and further improve reliability of the control information.

In this embodiment, the network device allocates, to the to-be-transmitted data in the foregoing manner, a first frequency domain resource corresponding to a first frequency domain resource size in the frequency domain resource size set. If the first frequency domain resource size is greater than or equal to the predefined size and less than a frequency domain resource size corresponding to the system bandwidth, a frequency domain resource pattern of the first frequency domain resource is a frequency domain pattern in a proper subset corresponding to the first frequency domain resource size. The first frequency domain resource size is a quantity of RBGs of the first frequency domain resource. Therefore, the network device may generate a first RIV used to indicate the first frequency domain resource. For a manner in which the network device calculates the first RIV of the first frequency domain resource, refer to the manner of calculating the RIV in Manner 1. Details are not described herein again.

For example, a correspondence among a value of an RBG granularity P, a length of a time unit, and system bandwidth of a communications system shown in Table 3 is used as an example. It is assumed that the system bandwidth is 20 MHz, and the network device allocates a frequency domain resource in an allocation manner of a downlink resource allocation type 0. In this case, the RBG granularity is equal to 12. In other words, the system bandwidth includes eight RBGs, each of the first seven RBGs includes 12 RBs, and the eighth RBG includes 16 RBs. It is assumed that the predefined size is 3.

It is assumed that a frequency domain resource size set configured by the network device for the terminal device by using higher layer signaling is {1, 2, 4, 5, 6, 7, 8}. When allocating a frequency domain resource based on a frequency domain resource size 1 or 2, the network device may allocate, to the to-be-transmitted data, any frequency domain pattern corresponding to any frequency domain resource size in the frequency domain resource size set. When allocating a frequency domain resource based on any one of frequency domain resource sizes 4, 5, 6, 7, and 8, the network device may allocate, to the to-be-transmitted data, a frequency domain pattern in a proper set corresponding to the frequency domain resource size.

In this scenario, when the network device calculates an RIV of a frequency domain resource in Manner 1, a correspondence between a scheme for a frequency domain resource and an RIV in the frequency domain resource size may be shown in Table 6:

Table 6

| RIV | Scheme for a frequency domain resource |
|---|---|
| 0 to 7 | All schemes for allocating a frequency domain resource with a size of one RBG |
| 8 to 35 | All schemes for allocating a frequency domain resource with a size of two RBGs |
| 36 | Allocate a frequency domain resource corresponding to a frequency domain resource pattern 1 with a size of four RBGs |
| 37 | Allocate a frequency domain resource corresponding to a frequency domain resource pattern 2 with a size of four RBGs |
| 38 | Allocate a frequency domain resource corresponding to a frequency domain resource pattern with a size of five RBGs |
| 39 | Allocate a frequency domain resource corresponding to a frequency domain resource pattern with a size of six RBGs |
| 40 | Allocate a frequency domain resource corresponding to a frequency domain resource pattern with a size of seven RBGs |

(continued)

| RIV | Scheme for a frequency domain resource |
|---|---|
| 41 | Allocate a frequency domain resource corresponding to a frequency domain resource pattern with a size of eight RBGs |

It is assumed that a frequency domain resource size set configured by the network device for the terminal device by using higher layer signaling is {1, 2, 3, 4, 5, 6, 7, 8}. When allocating a frequency domain resource based on a frequency domain resource size 1 or 2, the network device may allocate, to the to-be-transmitted data, any frequency domain pattern corresponding to any frequency domain resource size in the frequency domain resource size set. When allocating a frequency domain resource based on any one of frequency domain resource sizes 3, 4, 5, 6, 7, and 8, the network device may allocate, to the to-be-transmitted data, a frequency domain pattern in a proper set corresponding to the frequency domain resource size.

In this scenario, when the network device calculates an RIV of a frequency domain resource in Manner 1, a correspondence between a scheme for a frequency domain resource scheme and an RIV in the frequency domain resource size may be shown in Table 7:

**Table 7**

| RIV | Scheme for a frequency domain resource |
|---|---|
| 0 to 7 | All schemes for allocating a frequency domain resource with a size of one RBG |
| 8 to 35 | All schemes for allocating a frequency domain resource with a size of two RBGs |
| 36 | Allocate a frequency domain resource corresponding to a frequency domain resource pattern 1 with a size of three RBGs |
| 37 | Allocate a frequency domain resource corresponding to a frequency domain resource pattern 2 with a size of three RBGs |
| 38 | Allocate a frequency domain resource corresponding to a frequency domain resource pattern 1 with a size of four RBGs |
| 39 | Allocate a frequency domain resource corresponding to a frequency domain resource pattern 2 with a size of four RBGs |
| 40 | Allocate a frequency domain resource corresponding to a frequency domain resource pattern with a size of five RBGs |
| 41 | Allocate a frequency domain resource corresponding to a frequency domain resource pattern with a size of six RBGs |
| 42 | Allocate a frequency domain resource corresponding to a frequency domain resource pattern with a size of seven RBGs |
| 43 | Allocate a frequency domain resource corresponding to a frequency |
| | domain resource pattern with a size of eight RBGs |

According to the foregoing manner of calculating the RIV, RIVs of frequency domain resources corresponding to all frequency domain resource sizes in the frequency domain resource size set may be contiguous, so that a largest value in the RIVs corresponding to the frequency domain resource size set occupies a smallest quantity of bits. Therefore, a quantity of bits occupied by resource allocation information that includes the RIV and that is in the control information can be reduced, and reliability of the control information is further improved.

After calculating the first RIV of the first frequency domain resource in the foregoing manner, the network device may send control information including the first RIV to the terminal device. Correspondingly, after receiving the first RIV, the terminal device may determine the first frequency domain resource based on the first RIV and the frequency domain resource size set. Then, the terminal device may transmit the to-be-transmitted data to the network device by using the first frequency domain resource. The manner in which the terminal device determines the first frequency domain resource based on the first RIV and the frequency domain resource size set is not limited in this embodiment. For example, the terminal device may calculate, based on the frequency domain resource size set, an RIV corresponding to each frequency domain resource that may be allocated. Then, the terminal device may compare the first RIV and the RIV corresponding to each frequency domain resource that may be allocated, and use, as the first frequency domain resource, a frequency domain resource corresponding to an RIV that is the same as the first RIV.

In this embodiment, the network device may configure, for the terminal device by using higher layer signaling, a frequency domain resource size set that includes some frequency domain resource sizes supported by the system bandwidth, and each frequency domain resource size may correspond to all frequency domain resource patterns or some frequency domain resource patterns, so that the network device may allocate, to to-be-transmitted data, one of some frequency domain resource patterns corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

It should be noted that in the foregoing two manners, if frequency domain resource sizes included in the frequency domain resource size set configured by the network device for the terminal device by using higher layer signaling are all odd numbers, for example, {1, 3, 5, 7, ...}, or frequency domain resource sizes included in the frequency domain resource size set are all even numbers, for example, {2, 4, 6, 8, ...}, the network device may alternatively indicate, in an existing bitmap manner, the frequency domain resource to be allocated to the to-be-transmitted data.

In this scenario, the resource allocation information may be compressed by reducing a quantity of bits occupied by a bitmap. For example, the network device explicitly indicates, by using the bitmap, whether the first N-1 RBGs included in the system bandwidth are used to transmit the to-be-transmitted data, and implicitly indicates, by using a quantity of scheduled RBGs indicated by the bitmap, whether the last RBG included in the system bandwidth is used to transmit the to-be-transmitted data.

For example, the frequency domain resource size set configured by the network device for the terminal device by using the higher layer signaling is {2, 4, 6, 8}, and the quantity of RBGs included in the system bandwidth is 8. Therefore, the bitmap may occupy seven bits in the control information, to indicate whether the first seven RBGs included in the system bandwidth are used to transmit the to-be-transmitted data. For example, the bitmap is 1100110. After receiving the control information, the terminal device may learn, based on the bitmap, that four RBGs in the first seven RBGs are used to transmit the to-be-transmitted data. In other words, a quantity of RBGs used to transmit to-be-transmitted data is an even number. Because the frequency domain resource sizes included in the frequency domain resource size set configured by the network device for the terminal device by using higher layer signaling are all even numbers, the terminal device may determine that the last RBG included in the system bandwidth is not used to transmit the to-be-transmitted data.

If a bitmap carried in control information received by the terminal device is 1100100, the terminal device may learn, based on the bitmap, that three RBGs in the first seven RBGs are used to transmit the to-be-transmitted data. In other words, a quantity of RBGs used to transmit to-be-transmitted data is an odd number. Because the frequency domain resource sizes included in the frequency domain resource size set configured by the network device for the terminal device by using higher layer signaling are all even numbers, the terminal device may determine that the last RBG included in the system bandwidth is used to transmit the to-be-transmitted data.

According to the foregoing manner, a quantity of bits in resource allocation information that are occupied by a bitmap that indicates a frequency domain resource are one bit less than a quantity of bits in existing resource allocation information that are occupied by a bitmap that indicates a frequency domain resource, so that reliability of the control information can be further improved.

It may be understood that in this embodiment of this application, although a scenario in which URLLC service data is transmitted is used as an example to describe the information transmission method provided in this embodiment of this application, a person skilled in the art may understand that in any scenario in which a size of a TB obtained through division performed at a MAC layer for a physical layer changes slightly, the information transmission method provided in this embodiment of this application may be used to improve reliability of the control information. Details are not described herein again.

According to the information transmission method provided in this embodiment of this application, the network device may configure, for the terminal device by using higher layer signaling, a frequency domain resource size set that includes some frequency domain resource sizes supported by the system bandwidth, so that the network device may allocate, to the to-be-transmitted data, a frequency domain resource corresponding to a frequency domain resource size in the frequency domain resource size set. An RIV corresponding to the frequency domain resource is used to indicate the frequency domain resource. A quantity of bits occupied by the RIV is positively correlated with a quantity of schemes for the frequency domain resource that can be allocated by the network device to the to-be-transmitted data (to be specific, when the quantity of bits occupied by the RIV increases or decreases, the quantity of schemes for the frequency domain resource that can be allocated by the network device to the to-be-transmitted data also increases or decreases accordingly). Therefore, the quantity of schemes for the frequency domain resource that can be allocated by the network device to the to-be-transmitted data is reduced, so that a quantity of bits occupied by resource allocation information in control information can be further reduced, to further improve reliability of the control information.

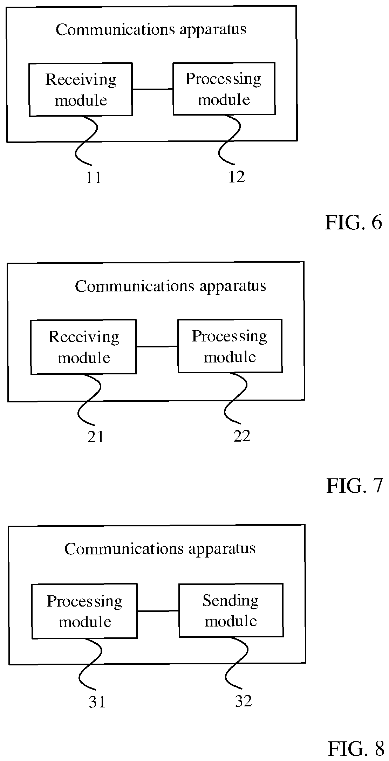

FIG. 6 is a schematic structural diagram of a communications apparatus according to an embodiment of this application. The communications apparatus implements some or all functions of the terminal device by using software, hardware, or a combination thereof. The communications apparatus may be a terminal device, or may be a chip in the terminal device. As shown in FIG. 6, the communications apparatus may include a receiving module 11 and a processing module 12.

The receiving module 11 is configured to receive a first resource indicator value RIV. The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling.

The processing module 12 is configured to determine the first frequency domain resource based on the first RIV and the frequency domain resource size set.

Optionally, in some embodiments, a second RIV is used to indicate a second frequency domain resource, a quantity of frequency domain resource units of the second frequency domain resource is a second frequency domain resource size, and the second frequency domain resource size belongs to the frequency domain resource size set; and when the second RIV is less than the first RIV, the second frequency domain resource size is less than or equal to the first frequency domain resource size.

Optionally, in some embodiments, when the second frequency domain resource size is equal to the first frequency domain resource size, a number of the first frequency domain resource unit of the second frequency domain resource is greater than a number of the first frequency domain resource unit of the first frequency domain resource; or numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

The communications apparatus provided in this embodiment of this application may perform the actions of the terminal device shown in Manner 1 in the foregoing method embodiment. Implementation principles and technical effects thereof are similar, and details are not described herein again.

FIG. 7 is a schematic structural diagram of another communications apparatus according to an embodiment of this application. The communications apparatus implements some or all functions of the terminal device by using software, hardware, or a combination thereof. The communications apparatus may be a terminal device, or may be a chip in the terminal device. As shown in FIG. 7, the communications apparatus may include a receiving module 21 and a processing module 22.

The receiving module 21 is configured to receive a first resource indicator value RIV. The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth. For example, the predefined size is equal to a half of a quantity of frequency domain resource units included in the system bandwidth.

The processing module 22 is configured to determine the first frequency domain resource based on the first RIV and the frequency domain resource size set.

Optionally, in some embodiments, when the first frequency domain resource size is greater than or equal to the predefined size, for each frequency domain resource pattern included in the proper subset, frequency domain resource units in the system bandwidth that do not belong to the frequency domain resource pattern are discontiguous; and/or when the first frequency domain resource size is less than the predefined size, frequency domain resource units in each frequency domain resource pattern included in the proper subset are discontiguous.

Optionally, in some embodiments, when the first frequency domain resource size is greater than the predefined size, the proper subset includes only one frequency domain resource pattern.

The communications apparatus provided in this embodiment of this application may perform the actions of the terminal device shown in Manner 2 in the foregoing method embodiment. Implementation principles and technical effects thereof are similar, and details are not described herein again.

FIG. 8 is a schematic structural diagram of still another communications apparatus according to an embodiment of this application. The communications apparatus may implement some or all functions of the network device by using software, hardware, or a combination thereof. The communications apparatus may be a network device, or may be a chip in the network device. As shown in FIG. 8, the communications apparatus may include a processing module 31 and a sending module 32.

The processing module 31 is configured to generate a first resource indicator value RIV, where the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling.

The sending module 32 is configured to send the first resource indicator value RIV

Optionally, in some embodiments, a second RIV is used to indicate a second frequency domain resource, a quantity of frequency domain resource units of the second frequency domain resource is a second frequency domain resource size, and the second frequency domain resource size belongs to the frequency domain resource size set; and when the second RIV is less than the first RIV, the second frequency domain resource size is less than or equal to the first frequency domain resource size.

Optionally, in some embodiments, when the second frequency domain resource size is equal to the first frequency domain resource size, a number of the first frequency domain resource unit of the second frequency domain resource is greater than a number of the first frequency domain resource unit of the first frequency domain resource; or numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

The communications apparatus provided in this embodiment of this application may perform the actions of the network device shown in Manner 1 in the foregoing method embodiment. Implementation principles and technical effects thereof are similar, and details are not described herein again.

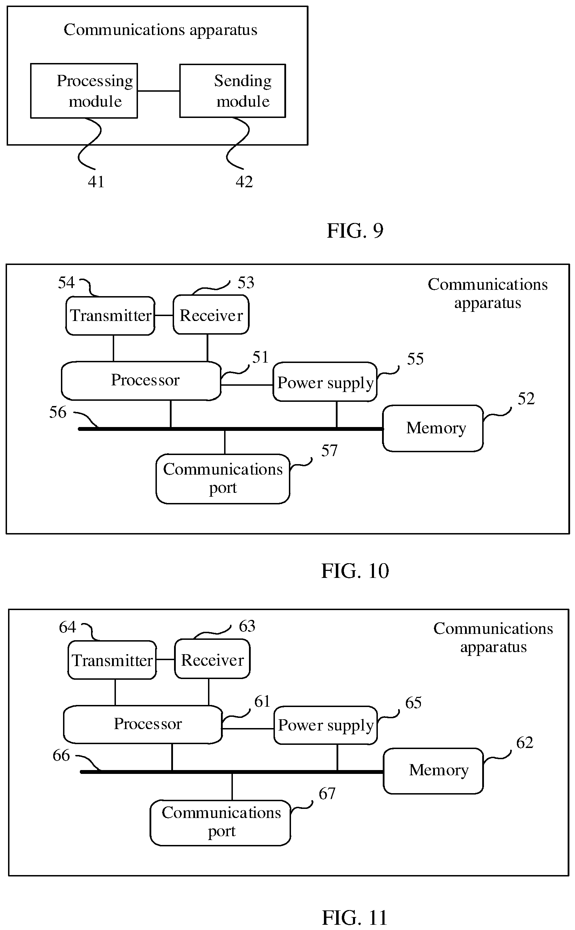

FIG. 9 is a schematic structural diagram of yet another communications apparatus according to an embodiment of this application. The communications apparatus may implement some or all functions of the network device by using software, hardware, or a combination thereof. The communications apparatus may be a network device, or may be a chip in the network device. As shown in FIG. 9, the communications apparatus may include a processing module 41 and a sending module 42.

The processing module 41 is configured to generate a first resource indicator value RIV The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth. For example, the predefined size is equal to a half of a quantity of frequency domain resource units included in the system bandwidth.

The sending module 42 is configured to send the first resource indicator value RIV.

Optionally, in some embodiments, when the first frequency domain resource size is greater than or equal to the predefined size, for each frequency domain resource pattern included in the proper subset, frequency domain resource units in the system bandwidth that do not belong to the frequency domain resource pattern are discontiguous; and/or when the first frequency domain resource size is less than the predefined size, frequency domain resource units in each frequency domain resource pattern included in the proper subset are discontiguous.

Optionally, in some embodiments, when the first frequency domain resource size is greater than the predefined size, the proper subset includes only one frequency domain resource pattern.

The communications apparatus provided in this embodiment of this application may perform the actions of the network device shown in Manner 2 in the foregoing method embodiment. Implementation principles and technical effects thereof are similar, and details are not described herein again.

It should be noted that, it should be understood that the sending module may be a transmitter in actual implementation, and the receiving module may be a receiver in actual implementation. The processing module may be implemented in a form of invoking software by a processing element, or may be implemented in a form of hardware. For example, the processing module may be a separately disposed processing element, or may be integrated into a chip of the foregoing apparatus for implementation. In addition, the processing module may be stored in a memory of the foregoing apparatus in a form of program code, and is invoked by a processing element of the foregoing apparatus to perform a function of the processing module. In addition, these modules may be all or partially integrated, or may be implemented independently. The processing element may be an integrated circuit and has a signal processing capability. In an implementation process, steps in the foregoing methods or the foregoing modules may be implemented by using a hardware integrated logical circuit in the processing element, or by using instructions in a form of software.

For example, the modules may be configured as one or more integrated circuits for implementing the method, such as one or more application-specific integrated circuits (application specific integrated circuit, ASIC), one or more microprocessors (digital signal processor, DSP), or one or more field programmable gate arrays (field programmable gate array, FPGA). For another example, when one of the modules is implemented by invoking program code by a processing element, the processing element may be a general purpose processor, such as a central processing unit (central processing unit, CPU), or another processor that can invoke the program code. For another example, the modules may be integrated together, and implemented in a form of a system-on-a-chip (system-on-a-chip, SOC).

FIG. 10 is a schematic structural diagram of still yet another communications apparatus according to an embodiment of this application. As shown in FIG. 10, the communications apparatus may include a processor 51 (for example, a CPU), a memory 52, and a receiver 53. The receiver 53 is coupled to the processor 51, and the processor 51 controls a receiving action of the receiver 53. The memory 52 may include a high-speed random access memory (random-access memory, RAM), or may further include a nonvolatile memory (non-volatile memory, NVM), for example, at least one magnetic disk storage. The memory 52 may store various instructions, to complete various processing functions and implement method steps in this application. Optionally, the communications apparatus in this application may further include a transmitter 54, a power supply 55, a communications bus 56, and a communications port 57. The receiver 53 and the transmitter 54 may be integrated into a transceiver of the communications apparatus, or may be independent transceiver antennas on the communications apparatus. The communications bus 56 is configured to implement a communication connection between elements. The communications port 57 is configured to implement a connection and communication between the communications apparatus and another peripheral.

In this embodiment of this application, the memory 52 is configured to store computer executable program code, and the program code includes an instruction. When the processor 51 executes the instruction, the instruction enables the processor 51 of the communications apparatus to perform a processing action of the terminal device in the foregoing method embodiment, enables the receiver 53 to perform a receiving action of the terminal device in the foregoing method embodiment, and enables the transmitter 54 to perform a sending action of the terminal device in the foregoing method embodiment. Details are as follows.

For example, the receiver 53 is configured to receive a first resource indicator value RIV. The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling. The processor 51 is configured to determine the first frequency domain resource based on the first RIV and the frequency domain resource size set.

In this implementation, in a possible design, a second RIV is used to indicate a second frequency domain resource, a quantity of frequency domain resource units of the second frequency domain resource is a second frequency domain resource size, and the second frequency domain resource size belongs to the frequency domain resource size set; and when the second RIV is less than the first RIV, the second frequency domain resource size is less than or equal to the first frequency domain resource size. Optionally, when the second frequency domain resource size is equal to the first frequency domain resource size, a number of the first frequency domain resource unit of the second frequency domain resource is greater than a number of the first frequency domain resource unit of the first frequency domain resource; or numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

For example, the receiver 53 is configured to receive a first resource indicator value RIV. The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth. The processor 51 is configured to determine the first frequency domain resource based on the first RIV and the frequency domain resource size set. For example, the predefined size is equal to a half of a quantity of frequency domain resource units included in the system bandwidth.

In this implementation, in a possible design, when the first frequency domain resource size is greater than or equal to the predefined size, for each frequency domain resource pattern included in the proper subset, frequency domain resource units in the system bandwidth that do not belong to the frequency domain resource pattern are discontiguous; and/or when the first frequency domain resource size is less than the predefined size, frequency domain resource units in each frequency domain resource pattern included in the proper subset are discontiguous. Optionally, when the first frequency domain resource size is greater than the predefined size, the proper subset includes only one frequency domain resource pattern.

The communications apparatus provided in this embodiment of this application may perform the actions of the terminal device in the foregoing method embodiment. Implementation principles and technical effects thereof are similar, and details are not described herein again.

FIG. 11 is a schematic structural diagram of a further communications apparatus according to an embodiment of this application. As shown in FIG. 11, the communications apparatus may include a processor 61 (for example, a CPU), a memory 62, and a transmitter 64. The transmitter 64 is coupled to the processor 61, and the processor 61 controls a sending action of the transmitter 64. The memory 62 may include a high-speed RAM memory, or may further include a nonvolatile memory NVM, for example, at least one magnetic disk memory. The memory 62 may store various instructions, to complete various processing functions and implement method steps in this application. Optionally, the communications apparatus in this application may further include a receiver 63, a power supply 65, a communications bus 66, and a communications port 67. The receiver 63 and the transmitter 64 may be integrated into a transceiver of the communications apparatus, or may be independent transceiver antennas on the communications apparatus. The communications bus 66 is configured to implement a communication connection between elements. The communications port 67 is configured to implement a connection and communication between the communications apparatus and another peripheral.

In this application, the memory 62 is configured to store computer executable program code, and the program code includes an instruction. When the processor 61 executes the instruction, the instruction enables the processor 61 of the communications apparatus to perform a processing action of the terminal device in the foregoing method embodiment, enables the receiver 63 to perform a receiving action of the terminal device in the foregoing method embodiment, and enables the transmitter 64 to perform a sending action of the terminal device in the foregoing method embodiment. Details are as follows.

For example, the processing module 61 is configured to generate a first resource indicator value RIV. The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling. The transmitter 64 is configured to send the first resource indicator value RIV.

In this implementation, in a possible design, a second RIV is used to indicate a second frequency domain resource, a quantity of frequency domain resource units of the second frequency domain resource is a second frequency domain resource size, and the second frequency domain resource size belongs to the frequency domain resource size set; and when the second RIV is less than the first RIV, the second frequency domain resource size is less than or equal to the first frequency domain resource size. Optionally, when the second frequency domain resource size is equal to the first frequency domain resource size, a number of the first frequency domain resource unit of the second frequency domain resource is greater than a number of the first frequency domain resource unit of the first frequency domain resource; or numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, where M is a positive integer.

For example, the processor 61 is configured to generate a first resource indicator value RIV. The first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set includes all frequency domain resource patterns supported by the first frequency domain resource size, and each frequency domain resource unit included in each frequency domain resource pattern is a frequency domain resource unit included in the system bandwidth. The transmitter 64 is configured to send the first resource indicator value RIV For example, the predefined size is equal to a half of a quantity of frequency domain resource units included in the system bandwidth.

In this implementation, in a possible design, when the first frequency domain resource size is greater than or equal to the predefined size, for each frequency domain resource pattern included in the proper subset, frequency domain resource units in the system bandwidth that do not belong to the frequency domain resource pattern are discontiguous; and/or when the first frequency domain resource size is less than the predefined size, frequency domain resource units in each frequency domain resource pattern included in the proper subset are discontiguous. Optionally, when the first frequency domain resource size is greater than the predefined size, the proper subset includes only one frequency domain resource pattern.

The communications apparatus provided in this embodiment of this application may perform the actions of the network device in the foregoing method embodiment. Implementation principles and technical effects thereof are similar, and details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general purpose computer, a dedicated computer, a computer network, or other programmable apparatuses. The computer instructions may be stored in a computer readable storage medium or may be transmitted from one computer readable storage medium to another computer readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk solid state disk (SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that numerical symbols used in the embodiments of this application are differentiated merely for ease of description, but are not used to limit the scope of the embodiments of this application.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

## Claims

1. An information transmission method, comprising:

   receiving, by a first communications apparatus, a first resource indicator value RIV, wherein the first RIV is used to indicate a first frequency domain resource used when a second communications apparatus performs data transmission with the first communications apparatus, a quantity of frequency domain resource units of the first frequency domain resource is a first frequency domain resource size, the frequency domain resource unit is a scheduling unit of a frequency domain resource used when the second communications apparatus performs data transmission with the first communications apparatus, the first frequency domain resource size belongs to a frequency domain resource size set, and the frequency domain resource size set is configured by using higher layer signaling; and
   determining, by the first communications apparatus, the first frequency domain resource based on the first RIV and the frequency domain resource size set.

2.  The method according to claim 1, wherein a second RIV is used to indicate a second frequency domain resource, a quantity of frequency domain resource units of the second frequency domain resource is a second frequency domain resource size, and the second frequency domain resource size belongs to the frequency domain resource size set; and

    when the second RIV is less than the first RIV, the second frequency domain resource size is less than or equal to the first frequency domain resource size.

3.  The method according to claim 2, wherein when the second frequency domain resource size is equal to the first frequency domain resource size, a number of the first frequency domain resource unit of the second frequency domain resource is greater than a number of the first frequency domain resource unit of the first frequency domain resource; or

    numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, wherein M is a positive integer.

4.  An information transmission method, comprising:

    receiving, by a first communications apparatus, a first resource indicator value RIV, wherein the first RIV is used to indicate a first frequency domain resource used when a second communications apparatus performs data transmission with the first communications apparatus, a quantity of frequency domain resource units of the first frequency domain resource is a first frequency domain resource size, the frequency domain resource unit is a scheduling unit of a frequency domain resource used when the second communications apparatus performs data transmission with the first communications apparatus, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set comprises all frequency domain resource patterns supported by the first frequency domain resource size, and each frequency domain resource unit comprised in each frequency domain resource pattern is a frequency domain resource unit comprised in the system bandwidth; and

    determining, by the first communications apparatus, the first frequency domain resource based on the first RIV and the frequency domain resource size set.

5.  The method according to claim 4, wherein when the first frequency domain resource size is greater than or equal to the predefined size, for each frequency domain resource pattern comprised in the proper subset, frequency domain resource units in the system bandwidth that do not belong to the frequency domain resource pattern are discontiguous; and/or

    when the first frequency domain resource size is less than the predefined size, frequency domain resource units in each frequency domain resource pattern comprised in the proper subset are discontiguous.

6.  The method according to claim 4 or 5, wherein the predefined size is equal to a half of a quantity of frequency domain resource units comprised in the system bandwidth.

7.  The method according to any one of claims 4 to 6, wherein when the first frequency domain resource size is greater than the predefined size, the proper subset comprises only one frequency domain resource pattern.

8.  An information transmission method, comprising:

    generating, by a second communications apparatus, a first resource indicator value RIV, wherein the first RIV is used to indicate a first frequency domain resource used when the second communications apparatus performs data transmission with a first communications apparatus, a quantity of frequency domain resource units of the first frequency domain resource is a first frequency domain resource size, the frequency domain resource unit is a scheduling unit of a frequency domain resource used when the second communications apparatus performs data transmission with the first communications apparatus, the first frequency domain resource size belongs to a frequency domain resource size set, and the frequency domain resource size set is configured by using higher layer signaling; and

    sending, by the second communications apparatus, the first resource indicator value RIV to the first communications apparatus.

9. The method according to claim 8, wherein a second RIV is used to indicate a second frequency domain resource, a quantity of frequency domain resource units of the second frequency domain resource is a second frequency domain resource size, and the second frequency domain resource size belongs to the frequency domain resource size set; and

when the second RIV is less than the first RIV, the second frequency domain resource size is less than or equal to the first frequency domain resource size.

10. The method according to claim 9, wherein when the second frequency domain resource size is equal to the first frequency domain resource size, a number of the first frequency domain resource unit of the second frequency domain resource is greater than a number of the first frequency domain resource unit of the first frequency domain resource; or

numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, wherein M is a positive integer.

11. An information transmission method, comprising:

generating, by a second communications apparatus, a first resource indicator value RIV, wherein the first RIV is used to indicate a first frequency domain resource used when the second communications apparatus performs data transmission with a first communications apparatus, a quantity of frequency domain resource units of the first frequency domain resource is a first frequency domain resource size, the frequency domain resource unit is a scheduling unit of a frequency domain resource used when the second communications apparatus performs data transmission with the first communications apparatus, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set comprises all frequency domain resource patterns supported by the first frequency domain resource size, and each frequency domain resource unit comprised in each frequency domain resource pattern is a frequency domain resource unit comprised in the system bandwidth; and

sending, by the second communications apparatus, the first resource indicator value RIV to the first communications apparatus.

12. The method according to claim 11, wherein when the first frequency domain resource size is greater than or equal to the predefined size, for each frequency domain resource pattern comprised in the proper subset, frequency domain resource units in the system bandwidth that do not belong to the frequency domain resource pattern are discontiguous; and/or

when the first frequency domain resource size is less than the predefined size, frequency domain resource units in each frequency domain resource pattern comprised in the proper subset are discontiguous.

13. The method according to claim 11 or 12, wherein the predefined size is equal to a half of a quantity of frequency domain resource units comprised in the system bandwidth.

14. The method according to any one of claims 11 to 13, wherein when the first frequency domain resource size is greater than the predefined size, the proper subset comprises only one frequency domain resource pattern.

15. A communications apparatus, comprising:

a receiver, configured to receive a first resource indicator value RIV, wherein the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling; and

a processor, configured to determine the first frequency domain resource based on the first RIV and the frequency domain resource size set.

16. The apparatus according to claim 15, wherein a second RIV is used to indicate a second frequency domain resource, a quantity of frequency domain resource units of the second frequency domain resource is a second frequency domain resource size, and the second frequency domain resource size belongs to the frequency domain resource size set; and

when the second RIV is less than the first RIV, the second frequency domain resource size is less than or equal to the first frequency domain resource size.

17. The apparatus according to claim 16, wherein when the second frequency domain resource size is equal to the first frequency domain resource size, a number of the first frequency domain resource unit of the second frequency domain resource is greater than a number of the first frequency domain resource unit of the first frequency domain resource; or

numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, wherein M is a positive integer.

18. A communications apparatus, comprising:

a receiver, configured to receive a first resource indicator value RIV, wherein the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set comprises all frequency domain resource patterns supported by the first frequency domain resource size, and each frequency domain resource unit comprised in each frequency domain resource pattern is a frequency domain resource unit comprised in the system bandwidth; and

a processor, configured to determine the first frequency domain resource based on the first RIV and the frequency domain resource size set.

19. The apparatus according to claim 18, wherein when the first frequency domain resource size is greater than or equal to the predefined size, for each frequency domain resource pattern comprised in the proper subset, frequency domain resource units in the system bandwidth that do not belong to the frequency domain resource pattern are discontiguous; and/or

when the first frequency domain resource size is less than the predefined size, frequency domain resource units in each frequency domain resource pattern comprised in the proper subset are discontiguous.

20. The apparatus according to claim 18 or 19, wherein the predefined size is equal to a half of a quantity of frequency domain resource units comprised in the system bandwidth.

21. The apparatus according to any one of claims 18 to 20, wherein when the first frequency domain resource size is greater than the predefined size, the proper subset comprises only one frequency domain resource pattern.

22. A communications apparatus, comprising:

a processor, configured to generate a first resource indicator value RIV, wherein the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, and the frequency domain resource size set is configured by using higher layer signaling; and

a transmitter, configured to send the first resource indicator value RIV.

23. The apparatus according to claim 22, wherein a second RIV is used to indicate a second frequency domain resource, a quantity of frequency domain resource units of the second frequency domain resource is a second frequency domain resource size, and the second frequency domain resource size belongs to the frequency domain resource size set; and

when the second RIV is less than the first RIV, the second frequency domain resource size is less than or equal to the first frequency domain resource size.

24. The apparatus according to claim 23, wherein when the second frequency domain resource size is equal to the first frequency domain resource size, a number of the first frequency domain resource unit of the second frequency domain resource is greater than a number of the first frequency domain resource unit of the first frequency domain resource; or

numbers of the first M frequency domain resource units of the second frequency domain resource are equal to numbers of the first M frequency domain resource units of the first frequency domain resource, and a number of the $(M+1)^{th}$ frequency domain resource unit of the second frequency domain resource is greater than a number of the $(M+1)^{th}$ frequency domain resource unit of the first frequency domain resource, wherein M is a positive integer.

25. A communications apparatus, comprising:

a processor, configured to generate a first resource indicator value RIV, wherein the first RIV is used to indicate a first frequency domain resource used during data transmission, a quantity of frequency domain resource units of the first frequency domain resource is a first frequency domain resource size, the frequency domain resource unit is a scheduling unit of a frequency domain resource used during data transmission, the first frequency domain resource size belongs to a frequency domain resource size set, when the first frequency domain resource size is greater than or equal to a predefined size and less than a frequency domain resource size corresponding to system bandwidth, the first frequency domain resource size corresponds to a proper subset of a first frequency domain resource pattern set, the first frequency domain resource pattern set comprises all frequency domain resource patterns supported by the first frequency domain resource size, and each frequency domain resource unit comprised in each frequency domain resource pattern is a frequency domain resource unit comprised in the system bandwidth; and

a transmitter, configured to send the first resource indicator value RIV.

26. The apparatus according to claim 25, wherein when the first frequency domain resource size is greater than or equal to the predefined size, for each frequency domain resource pattern comprised in the proper subset, frequency domain resource units in the system bandwidth that do not belong to the frequency domain resource pattern are discontiguous; and/or

when the first frequency domain resource size is less than the predefined size, frequency domain resource units in each frequency domain resource pattern comprised in the proper subset are discontiguous.

27. The apparatus according to claim 24 or 25, wherein the predefined size is equal to a half of a quantity of frequency domain resource units comprised in the system bandwidth.

28. The apparatus according to any one of claims 24 to 26, wherein when the first frequency domain resource size is greater than the predefined size, the proper subset comprises only one frequency domain resource pattern.

29. A computer readable storage medium, configured to store a computer program or an instruction, wherein when the computer program or the instruction is run on a computer, the computer is enabled to perform the method according to any one of claims 1 to 7.

30. A computer readable storage medium, configured to store a computer program or an instruction, wherein when the computer program or the instruction is run on a computer, the computer is enabled to perform the method according to any one of claims 8 to 14.

FIG. 1

FIG. 2A

FIG. 2B

FIG. 2C

Start location of a frequency domain resource

FIG. 2D

Start location of a frequency domain resource

FIG. 2E

Network device    Terminal device

S101: Generate a first RIV

S102: Send the first RIV to the terminal device

S103: Determine a first frequency domain resource based on the first RIV and a frequency domain resource size set

FIG. 3

Frequency domain resource of a terminal device

FIG. 4A

Frequency domain resource of a terminal device

FIG. 4B

Frequency domain resource pattern 1 of a frequency domain resource size 3

Frequency domain resource pattern 2 of a frequency domain resource size 3

Frequency domain resource pattern 1 of a frequency domain resource size 4

Frequency domain resource pattern 2 of a frequency domain resource size 4

Frequency domain resource pattern of a frequency domain resource size 5

Frequency domain resource pattern of a frequency domain resource size 6

Frequency domain resource pattern of a frequency domain resource size 7

Frequency domain resource pattern of a frequency domain resource size 8

FIG. 5

FIG. 6

FIG. 7

FIG. 8

Communications apparatus

Processing module

Sending module

41

42

FIG. 9

54

Transmitter

53

Receiver

Communications apparatus

51

Processor

Power supply

55

56

Memory

52

Communications port

57

FIG. 10

64

Transmitter

63

Receiver

Communications apparatus

61

Processor

Power supply

65

66

Memory

62

Communications port

67

FIG. 11

## INTERNATIONAL SEARCH REPORT

| International application No. |
|---|
| **PCT/CN2018/076643** |

**A. CLASSIFICATION OF SUBJECT MATTER**

H04W 74/04(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNKI, CNPAT, WPI, EPODOC: 资源, 单元, 子集, 频域, 数量, 指示, 编号, 调度, 信令, 单位, 图样, 集合, 粒度, 信息, 媒体 访问控制, RBG, MAC, CE, resource, block, RIV, RB, 5G, LTE, URLLC, signaling, data, scheduling, wireless, communication, user, low, latency, ultra-reliable

**C. DOCUMENTS CONSIDERED TO BE RELEVANT**

| Category* | Citation of document, with indication, where appropriate, of the relevant passages | Relevant to claim No. |
|---|---|---|
| A | CN 106561066 A (SHANGHAI LANGBO COMMUNICATION TECHNOLOGY CO., LTD.) 12 April 2017 (2017-04-12) description, paragraphs [0008]-[0084] | 1-30 |
| A | CN 107027183 A (CHINA ACADEMY OF TELECOMMUNICATIONS TECHNOLOGY) 08 August 2017 (2017-08-08) entire document | 1-30 |
| A | CN 106332286 A (ZTE CORPORATION) 11 January 2017 (2017-01-11) entire document | 1-30 |
| A | CN 102845121 A (LG ELECTRONICS INC.) 26 December 2012 (2012-12-26) entire document | 1-30 |
| A | WO 2016070417 A1 (PANASONIC INTELLECTUAL PROPERTY CORPORATION OF AMERICA) 12 May 2016 (2016-05-12) entire document | 1-30 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 October 2018** | **29 October 2018** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2018/076643**

| Patent document cited in search report | | | Publication date (day/month/year) | Patent family member(s) | | | Publication date (day/month/year) |
|---|---|---|---|---|---|---|---|
| CN | 106561066 | A | 12 April 2017 | WO | 2017054777 | A1 | 06 April 2017 |
| CN | 107027183 | A | 08 August 2017 | | None | | |
| CN | 106332286 | A | 11 January 2017 | WO | 2017000903 | A1 | 05 January 2017 |
| | | | | US | 2018192409 | A1 | 05 July 2018 |
| | | | | EP | 3319387 | A1 | 09 May 2018 |
| CN | 102845121 | A | 26 December 2012 | CN | 102845121 | B | 04 May 2016 |
| | | | | JP | 2013527677 | A | 27 June 2013 |
| | | | | WO | 2011129610 | A3 | 15 March 2012 |
| | | | | WO | 2011129610 | A2 | 20 October 2011 |
| | | | | EP | 2560451 | A2 | 20 February 2013 |
| | | | | EP | 2560451 | A4 | 11 January 2017 |
| | | | | JP | 5736446 | B2 | 17 June 2015 |
| WO | 2016070417 | A1 | 12 May 2016 | CN | 107113787 | A | 29 August 2017 |
| | | | | US | 2017318565 | A1 | 02 November 2017 |
| | | | | JP | 2017539123 | A | 28 December 2017 |

Form PCT/ISA/210 (patent family annex) (January 2015)